Europäisches Patentamt

European Patent Office

Office européen des brevets

(19)

(11) Publication number: **0 249 212 B1**

## EUROPEAN PATENT SPECIFICATION

(12)

(45) Date of publication of patent specification: **09.09.92**

(51) Int. Cl.⁵: **H04N 1/00**, H04N 1/028, G03G 15/30

(21) Application number: **87108384.6**

(22) Date of filing: **10.06.87**

(54) **Hand held manually sweeping printing apparatus.**

(30) Priority: **11.06.86 JP 135181/86**
**11.12.86 JP 189811/86 U**

(43) Date of publication of application:
**16.12.87 Bulletin 87/51**

(45) Publication of the grant of the patent:
**09.09.92 Bulletin 92/37**

(84) Designated Contracting States:
**DE FR GB IT**

(56) References cited:
**EP-A- 0 183 980**
**US-A- 4 523 235**
**US-A- 4 626 925**

(73) Proprietor: **CASIO COMPUTER COMPANY LIMITED**
**6-1, 2-chome, Nishi-Shinjuku**
**Shinjuku-ku Tokyo(JP)**

(72) Inventor: **Yajima, Hiroshi**
**Patent Dept. Dev.Div. CASIO C. CO. 3-2-1**
**Sakae-cho**
**Hamura-machi Nishitama-gun Tokyo**
**190-11(JP)**

Inventor: **Hayashi, Masaki**
**Patent Dept. Dev.Div. CASIO C. CO. 3-2-1**
**Sakae-cho**
**Hamura-machi Nishitama-gun Tokyo**
**190-11(JP)**
Inventor: **Satoh, Takashi**
**Patent Dept. Dev.Div. CASIO C. CO. 3-2-1**
**Sakae-cho**
**Hamura-machi Nishitama-gun Tokyo**
**190-11(JP)**
Inventor: **Shioya, Masaharu**
**Patent Dept. Dev.Div. CASIO C. CO. 3-2-1**
**Sakae-cho**
**Hamura-machi Nishitama-gun Tokyo**
**190-11(JP)**

(74) Representative: **Patentanwälte Grünecker, Kinkeldey, Stockmair & Partner**
**Maximilianstrasse 58**
**W-8000 München 22(DE)**

## Description

The present invention relates to a hand-held, printing apparatus according to the preamble of claim 1.

Hand-held electronic apparatuses of this type are known. For instance, U.S. Patent No. 3,767,020 to Rowe, October 23, 1973 discloses a manually positionable automatic printer, which can be manually moved across a printing medium, thereby printing information on this printing medium. This automatic printer comprises a manually manipulatable housing, a wire matrix printer head, an inking ribbon, a timing signal generating means for generating timing signals as the printer is moved across the printing medium, and a control means for driving the printer head in accordance with the timing signals output from the timing signal generating means. The printer head, the ribbon, the signal generating means, and the control means are provided within the manually manipulatable housing. The housing is placed on the recording medium, with the head contacting the ribbon, which in turn contacts the recording medium. In this condition, the housing is held in a hand, and is moved across the medium. As the housing is thus moved, the signal generating means produces and supplies timing signals to the control means. In response to these signals, the printer head prints characters on the recording medium.

The manually positionable automatic printer has a drawback. Since it has a wire matrix printer head, it can hardly be made smaller and lighter, particularly when it is designed to perform a high-resolution printing.

US-4,523,235 discloses an electronic microcopier apparatus including a reading head, an electronic memory and a writing head. The reading head comprises photosensors and transmits information to the electronic memory. In the writing mode, the information from the memory is fed to a writing head and reproduced on a piece of paper. A wheel with angular markings rolls as the copier is displaced over the textural material.

Further, conventional manually positionable printer is likely to print information in an uneven density or fail to print part of the information. This is because the printer head is fixed to the housing, and the contact between the head and the recording medium cannot remain in the same condition, or the pressure applied on the medium by the printer head cannot be kept constant during the image reproduction.

It is therefore the object of the present invention to provide a hand-held printing apparatus which is small and light, can be manufactured at low cost, and can freely print data in a high resolution on any recording medium with even density.

This object is solved by the characterizing features of claim 1. Preferred embodiments are subject to the sub-claims.

The features of the invention will become apparent with reference to the following specification and to the drawings, in which:

Fig. 1 is a perspective view of a hand-held copier according to a first embodiment of the present invention;

Fig. 2A is a sectional view showing the internal structure of the hand-held copier shown in Fig. 1;

Fig. 2B is also a cross-sectional view of the hand-held copier, taken along line II-II in Fig. 2A and illustrating the major components of the copier;

Fig. 3 is a perspective view showing the major components of the hand-held copier;

Fig. 4 is a block diagram showing the electronic circuit provided within the hand-held copier;

Fig. 5 is a block diagram of the timing signal generating section used in the hand-held copier;

Figs. 6A to 6E illustrate a timing chart explaining how the copier reads information from an original;

Fig. 7 is a diagram explaining how image data is written into the image data memory used in the hand-held copier;

Fig. 8 is a perspective view showing the outer appearance common to three key-in data printers according to second, third and fourth embodiments of the invention;

Fig. 9 is a perspective view showing the internal structure of the key-in data printer according to the second embodiment of the invention;

Fig. 10A is a sectional view schematically representing the key-in data printer according to the second embodiment being not used;

Fig. 10B is also a sectional view schematically showing the key-in data printer according to the second embodiment with its printer head projecting out of the housing of the copier;

Fig. 10C is a sectional view schematically illustrating the key-in data printer according to the second embodiment in the printing mode;

Fig. 11 is a block diagram showing the electronic circuitry commonly used in the second, and third embodiments of the invention;

Fig. 12A is a sectional view schematically showing the key-in data printer according to the third embodiment being not used;

Fig. 12B is a sectional view schematically representing the key-in data printer according to the third embodiment with its printer head projecting out of the housing of the apparatus;

Fig. 12C is also a sectional view schematically showing the key-in data printer according to the third embodiment in the printing mode.

## OUTLINE OF HAND-HELD COPIER

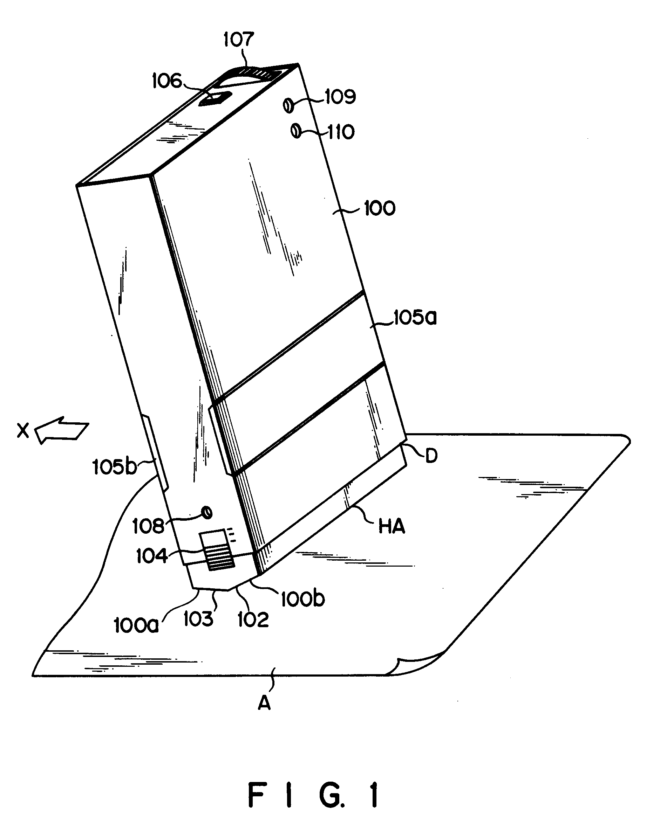

A hand-held copier according to the first embodiment of the present invention, will now be described with reference to Figs. 1 to 7. Fig. 1 is a perspective view showing the outer appearance of the hand-held, or handy copier. As is illustrated in this figure, the hand-held copier comprises housing 70 mm wide, 30 mm thick, and 160 mm long and generally designated by 100. The copier can read and print an image having a width of 40 mm at most, and can store data representing an image having a width of 40 mm at most and a length of 200 mm at most. It can read dots printed in a resolution of 8 dots/mm at most, and can print ink dots in a resolution of 8 dots/mm at most.

Head section HA is attached to the distal end (or the lower end) of housing 100. Head section HA, which is designed to read an image from an original or a material to be copied and also to print the image on a piece of paper, is less wide and less thick than housing 100. Therefor, stepped portion D is formed between section HA and housing 100. The distal end of head section HA consists of two long, narrow inclined surfaces 100a and 100b. These inclined surfaces 100a and 100b are jointed at their loner sides, thus forming a ridge roof. Reading section 102 is mounted on inclined surface 100b, and printing section 103 is mounted on surface 100b. Power/read/print switch 104 is provided on one side of housing 100, and located at the lower end of this side. Operation switches 105a and 105b are provided on the opposing wider surface (referred to as "front surface" and "rear surface" not shown in Fig. 1) of housing 100, respectively. Both switches 105a and 105b are shaped like plates. Upper portions of the front and rear surfaces of housing 100 which are above operation switches 105a and 105b can be held between a user's thumb and fingers, so that the user may sweep the copier across an original to optically read image data or information from the original, or to print the image data on a piece of paper A. Power/read/print switch 104 is operated to turn the copier on or off, and to set the copier in a reading mode or a printing mode. More precisely, when switch 104 is operated to select either the reading mode or the printing mode, the apparatus is automatically turned on. Further, clear/reset key 106 and density control dial 107 are provided on the proximal end of housing 100. Clear key 106 is pushed to erase an image memory (later described in detail) when the hand-held copier is set in the reading mode, and to initialize the address of the image data memory when the copier is set in the printing mode. LED (light-emitting diode) 108 is provided near switch 104. Two other LEDs 109 and 110 are provided on the front side of housing 100, and located near the proximal end of housing 100. LED 108 is a power-supply pilot lamp, and LED 109 is a memory pilot lamp. LED 110 is an alarm lamp, and emits light when the hand-held copier is moved at a speed exceeding a predetermined value.

In order to read image data from an original by the hand-held copier, power/read/print switch 104 is moved to a "read" position, whereby the copier is turned on, and LED 108 emits light to inform the user that the copier is now ready to use. The user manually sweeps the copier across the original in a direction opposite to the X-direction as illustrated, while depressing both operation switches 105a and 105b and keeping reading section 102 in contact with the original B. Then the image data formed on the original is optically read by reading section 102 and is subsequently written into the image data memory.

To print out the image data thus read from the original, power/read/print switch 104 is moved to a "print" position. Then, the user again manually sweeps the copier across a piece of ordinary, or plain paper A, as a printing medium, in the direction of arrow X, while depressing both operation switches 105a and 105b and keeping printing section 103 in contact with paper A under a predetermined hand pressure. As a result, the image data is read out from the image data memory and is printed or reproduced on paper A by means of printer section 103.

## READING AND PRINTING OPERATION

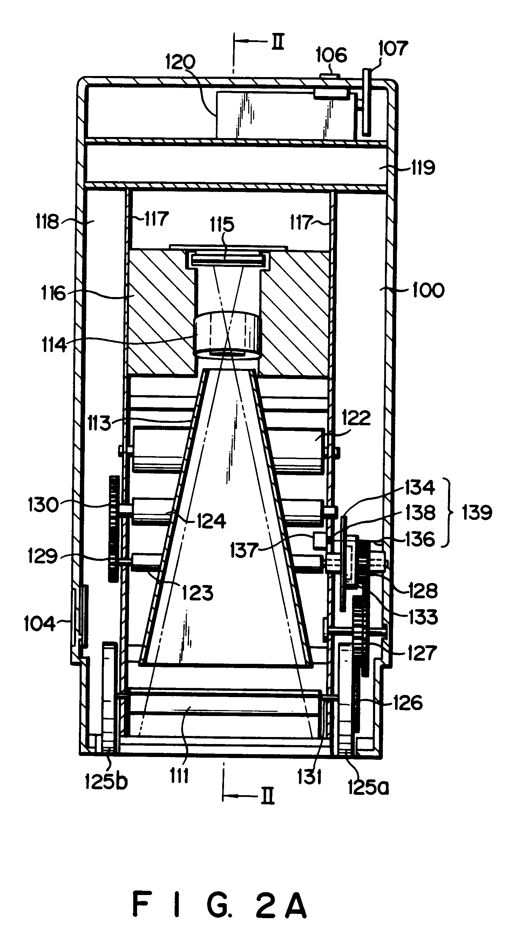

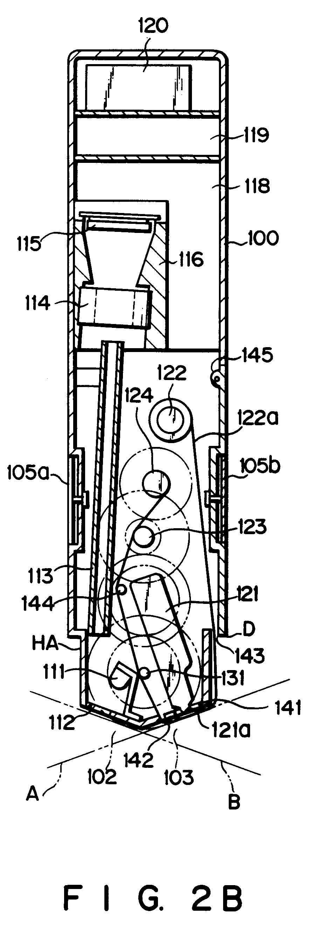

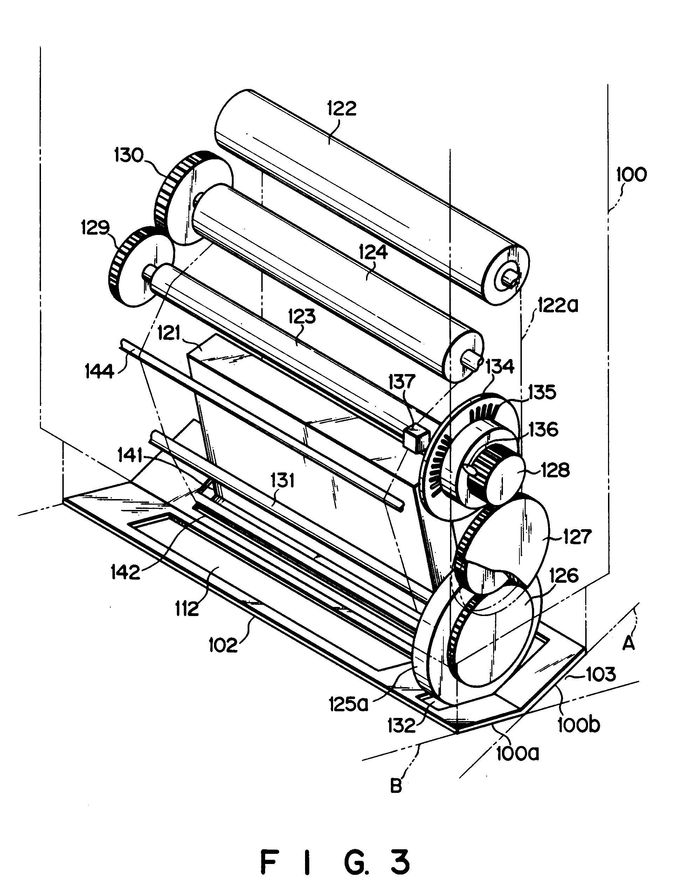

Reading section 102 and printing section 103, both provided within housing 100, will now be described in greater detail, with reference to Figs. 2A and 2B and Fig. 3.

As is shown in Figs. 2A and 2B, reading section 102 includes light source 111 provided close to inclined surface 100a, window 112 provided in an opening cut in inclined surface 100a, and vertical light guide 113, lens 114 located at the top of guide 113, and line image sensor 115 provided above lens 114. Light source 111 includes an array of LEDs. The light emitted from light source 111 is applied to the original through window 112, and the light reflected from the original is guided by light guide 113 to lens 114 and then to image sensor 115. Image sensor 115 is, for instance, a 1024-bit CCD (charge-coupled device) line image sensor. Of 1024 bits, 320 bits are used to read an image having a width of 40 mm at most, in an image resolution of 8 dots/mm. Lens 114 and line image sensor 115 are held in specified positions by supporting member 116. This supporting member 116 is fastened to inner frame 117 provided within housing 100 and spaced apart by a predetermined distance from the inner surfaces of housing 100. Space 118 accommodating electronic parts (later described) is provided within housing 100, at one side of supporting member 116. Space 119 accommodating a battery is also provided within housing 100 and located above supporting member 116. Linear image sensor 115 is connected to circuit board (not shown) provided within space 118. Clear key 106, density control dial 107, and the like, are connected to circuit board 120.

Within inner frame 117 there are provided thermal printer head 121, roll 122 of ink ribbon, roller 123 for feeding ribbon 122a at constant speed, and ribbon take-up roller 124. Rubber rollers 125a and 125b, and gears 126 to 130 are provided within the space between inner frame 117 and the inner surfaces of housing 100. Rubber rollers 125a and 125b are rotatably mounted on shaft 131 horizontally extending across inner frame 117 and protruding at both ends from inner frame 117. They are positioned such that parts of their peripheries protrude outside through slits 132 cut in the end portions of inclined surfaces 100a and 100b. Gear 126 is coaxially secured to rubber roller 125a. This gear 126, which has a smaller diameter than rubber roller 125, is coupled by intermediate gear 127 to gear 128. Gear 128 is coupled by clutch 133 to the shaft of ribbon-feeding roller 123. Clutch, which is of one-way type, transmits the rotation of gear 128 to ribbon-feeding roller 123 when the user sweeps the hand-held copier across paper A to print an image on paper A.

Encoder disk 134 is fastened to the input-end of clutch 133. Encoder disk 134 can rotate, independently of the operation of one-way clutch 133, when gear 128 rotates. As is shown in Fig. 3, encoder disk 134 has a number of radial slits 135 located at regular intervals in the circumferential direction of disk 134. LED 136 is provided at one side of disk 134, and photosensor 137 is provided at the other side of disk 134. As is illustrated in Fig. 2A, LED 136 is secured to the inner surface of housing 100, and photosensor 137 is fastened to the inner surface of inner frame 117. Through hole 138 is cut in frame 117, positioned coaxially with photosensor 137. Hence, the light emitted from LED 136 can be applied to photosensor 137 first through slits 135 of encoder disk 134 and then via through hole 138. Encoder disk 134, LED 136 and photosensor 137 constitute encoder 139.

As is shown in Fig. 3, printing window 141 and ribbon-guiding window 142, both shaped like long slits, are cut in inclined surface 100b and extend parallel to each other. Ribbon-guiding window 142 is located closer to inclined surface 100b than printing window 141. Thermal printer head 121 has heating section 121a, which is inserted in printing window 141. Heating section 121a slightly protrudes from inclined surface 100a. Slit 143 is cut in stepped portion D close to that side of housing 100 on which operation key 105b, as is shown in Fig. 2B. Thermal-transfer ink ribbon 122a taken out of roll 122 is led outside housing 100 through slit 143, and then guided into housing 100 through ribbon-guiding window 142 after passing by heating section 121a of thermal printer head 121. Inside housing 100, ink ribbon 122a is guided by shaft 131, ink ribbon guide 144 and ribbon-feeding roller 123 and is finally taken up around ribbon take-up roller 124.

As is shown in Fig. 2B, the lower half of that side of housing 100 on which operation key 105b is provided can be opened when rotated around hinge 145. When the lower half of this side is open, used roll 122 of ribbon can be replaced with a new one, and the interior of housing 100 can be inspected for maintenance.

## ELECTRONIC CIRCUIT OF HAND-HELD COPIER

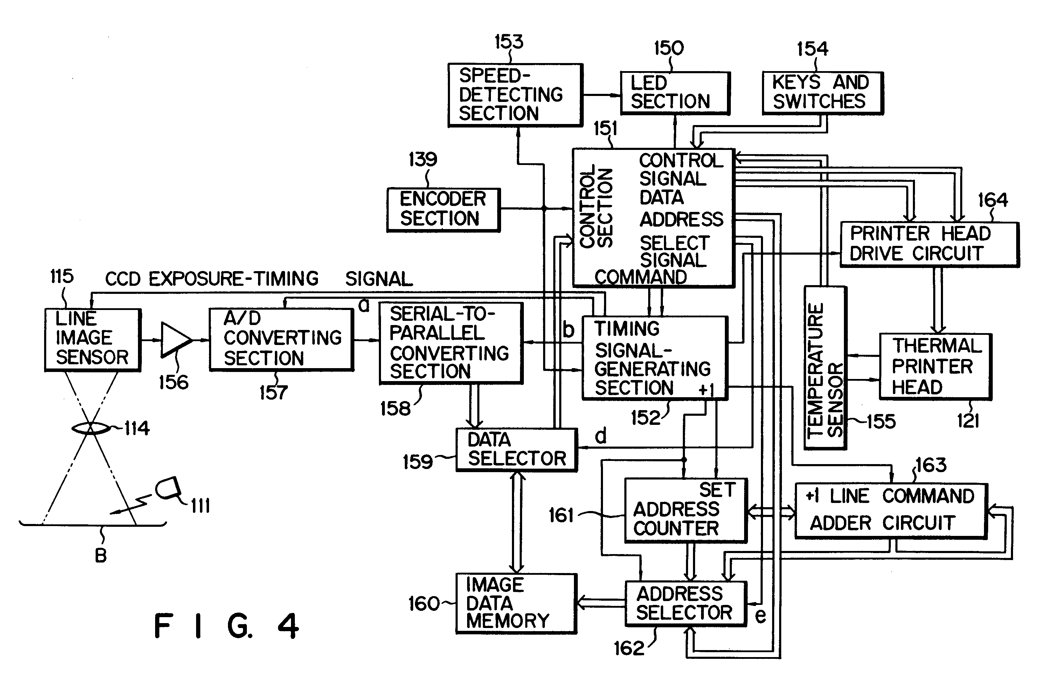

The electric circuitry mounted on circuit board provided within space 118 will now be explained with reference to Fig. 4.

As has been described, encoder section 139 includes encoder disk 134, LED 136 and photosensor 137. When the user manually sweep the copier across the original B while keeping the copier in contact with the original B, rubber rollers 125a and 125b rotate, thus rotating encoder disk 134. As disk 134 rotates, the light emitted from LED 136 is intermittently applied to photosensor 137 through radial slits 135 of disk 134. Every time photosensor 137 receives the light, it produces a pulse. Hence, encoder section 139 generates a pulse signal consisting of such pulses and, thus, representing the distance over which the copier has been moved across the original. The pulse signal is supplied from encoder section 139 to control section 151, timing signal-generating section 152, and speed-detecting section 153. Speed-detecting section 153 detects the speed at which housing 100 is moved. It outputs an alarm signal when the speed of housing 100 exceeds a predetermined value. This alarm signal is supplied to LED section 150, thereby turning on LED 110 which functions as an alarm lamp.

The signals are supplied to control section 151, which are generated when keys and switches, 154, such as power/read/print switch 104, operations keys 105a and 105b, clear key 106 and density control dial 107, are operated. The signal generated by temperature sensor 155, which detects the temperature of thermal print head 121, is also supplied to control section 151. Control section 151 has a power-supply voltage detector (not shown). In accordance with the input signals, control section 151 controls LED 108 (i.e., the powersupply pilot lamp) and LED 109 (i.e., memory pilot lamp), both provided in LED section 150, and also controls other components of the copier. Further, control section 151 supplies an operation command to timing signal-generating section 152 when the hand-held copier is set either in the reading mode or in the printing mode.

Timing signal-generating section 152 generates a timing signal in response to the operation command given by control section 151. This signal represents the timing at which the line image sensor 115 are exposed to light one after another. Section 152 generates other timing signals in synchronism with the pulses of the signal supplied from encoder section 139, such as read-timing signals "a", serial-to-parallel conversion signals "b", "+1" signals, set signals and "+1 line" command signals.

## OPTICALLY READING BY IMAGE SENSOR

The CCD exposure-timing signal output by timing signal-generating section 152 is supplied to line image sensor 115. Read-timing signals a are supplied to A/D converting section 157. Serial-to-parallel converting signals "b" are supplied to serial-to-parallel converting section 158. The "+1" signals are input to address counter 161 and also to address selector 162. The set signals are input to address counter 161. The "+1 line" command signals are supplied to adder circuit 163. Line image sensor 115 receives the light reflected from original B, in synchronism with the CCD exposure-timing signal, and produces output signals. The output signals of image sensor 115 are amplified by amplifier 156 and then input to A/D converting section 157. A/D converting section 157 converts these input signals into binary signals, or black signals and white signals, in synchronism with read-timing signals "a". The binary signals, thus obtained, are supplied to serial-to-parallel converting section 158. Section 158 converts the input signals into, for instance, 8-bit data signals in synchronism with serial-to-parallel conversion signals "b". These 8-bit data signals are input via data selector 159 to image data memory 160. Data selector 159 is connected to control section 151 by a data line. Selection signal "d" is supplied through this data line from section 151 to data selector 159. In accordance with selection signal "d", data selector 159 selects control section 151 or serial-to-parallel converting section 158.

Any desired write address of image data memory 160, which consists of a row address and a column address, is designated by the output of address counter 161 or by the output of adder circuit 163, and is selected by address selector 162. On the other hand, any read address of image data memory 160 is supplied from control section 151 to memory 160 via address selector 162. Address counter 161 counts the timing signals supplied from timing signal-generating section 152, thereby providing a row address and a column address. The address data thus provided is supplied to address selector 162 and also to adder circuit 163. Adder circuit 163 has a register (not shown). The address data input to address selector 162 is temporarily stored in this register, and is incremented by one every time a "+1 line" command signal is supplied to adder circuit 163 from timing signal-generating section 152. The row address and the column address output from adder circuit 163 are fed back to the input terminal of adder circuit 163, and are also supplied to address selector 162. In response to select signal "e" supplied from control section 151, address selector 162 selects address counter 161 and adder circuit 163, or control section 151. In response to a "+1" signal supplied from timing signal-generating section 152, address selector 162 selects either address counter 161 or adder circuit 163, and also designates one of the addresses of image data memory 160. Assume that address selector 162 has selected address counter 161 and adder circuit 163 in accordance with select signal "e". In this case, address selector 162 selects address counter 161 when the "+1" signal is at a high level, and selects adder circuit 163 when the "+1" signal is at a low level. When one line of image data is written into image data memory 160, timing signal-generating section 152 supplies a set signal to address counter 161. Then, the address data stored in the register provided within adder circuit 163 is input address counter 161, whereby the next line of image data can be written into image data memory 160.

After all image information on original B has been written into image data memory 160, the hand-held copier can be switched to the printing mode. When the copier is set in the printing mode, control section 151 causes data selector 159 to gradually read the image data from image data memory 160 as section 151 receives the output signals of encoder 139 which represent the distance the copier is moving across a piece of paper "A". Then, control section 151 determines an optimum time for supplying power to hermal printer head 121 from the data output by temperature sensor 155 and representing the temperature of printer head 121, the data output by the power-supply voltage detector and showing the power-supply voltage, and the data output by turning density control dial 107 and representing the selected print density. The data representative of this optimum time, or printing data, is output to printer head drive circuit 164. In accordance with the printing data, circuit 164 drives thermal printer head 121 in synchronism with the timing signals supplied from timing signal-generating section 152.

TIMING SIGNAL GENERATING

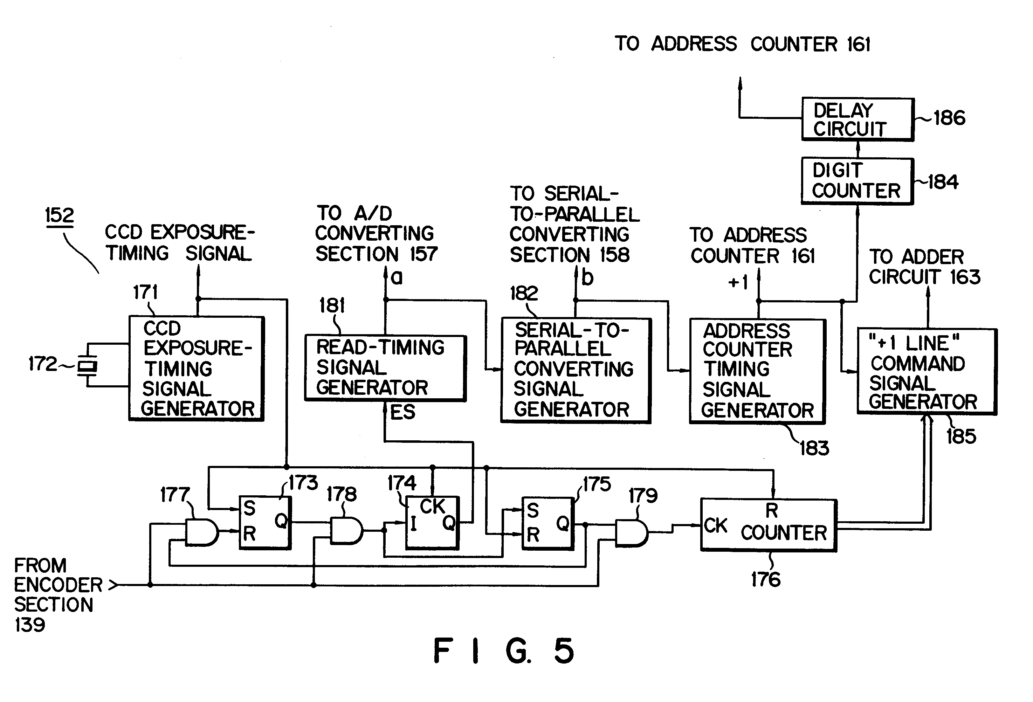

Timing signal-generating section 152 will now be described in detail, with reference to Fig. 5. As is shown in Fig. 5, section 152 includes CCD exposure-timing signal generator 171. Quartz crystal oscillator 172 is connected to this signal generator 171. Generator 171 generates CCD (charge coupled device) exposure-timing signals as long as the hand-held copier is set in the reading mode. It generates these timing signals at the frequency determined based on the oscillation frequency of quartz crystal oscillator 172. The CCD exposure-timing signals are supplied to line image sensor 115 (Fig. 4). They are also supplied to the set terminal S of R-S flip-flop 173, to the clock terminal CK of D flip-flop 174, to the reset terminal R of R-S flip-flop 175, and to the reset terminal R of counter 176. Flip-flop 174 holds every input signal until a clock signal is supplied to its clock terminal CK. The pulse signal output from encoder section 139 and representing the distance the copier is being moved across original B is input to AND circuits 177, 178 and 179. The output of flip-flop 175 is input to AND circuit 177. The output of AND circuit 177 is supplied to the reset terminal R of flip-flop 173. The output signal of this flip-flop 173 is supplied via AND circuit 178 to the data input terminal I of flip-flop 174 and also to the set terminal S of flip-flop 175. The output signal of flip-flop 174 is supplied to read-timing signal generator 181 as enable signal "ES". The output signal of flip-flop 175 is supplied via AND circuit 179 to the clock terminal CK of counter 176. In response to enable signal "ES" supplied from flip-flop 174, read-timing signal generator 181 produces read-timing signal "a" which will be used to write one-line image data into image data memory 160. Signal "a" is input to A/D converting section 157 and serial-to-parallel converting signal generator 182. In response to read-timing signal "a", generator 182 generates serial-to-parallel converting signal "b" having a specified cycle. Signal "b" is input to serial-to-parallel converting section 158 and address counter timing signal generator 183. This signal generator 183 produces a " + 1" signal upon receipt of serial-to-parallel converting signal "b". The " + 1" signal is supplied to address counter 161 and also to address selector 162. The " + 1" signal is also input to digit counter 184 and " + 1 line" command signal generator 185. Signal generator 185 generates pulses in the same number as is represented by the count value of counter 176, when the " + 1" signal output by address counter timing signal generator 183 falls from a high level to a low level. These pulses are supplied as a " + 1 line" command signal to adder circuit 163. Digit counter 184 produces a carry signal every time its count value reaches the number of digits forming one line of the image data which image data memory 160 will store. This carry signal is delayed by delay circuit 186 for a predetermined period of time, and then supplied as a set signal to address counter 161.

READING OPERATION

It will be explained how the hand-held copier is operated to read the information, such as characters and an image, from original B.

First, the user slides power/read/print switch 104 from a "power off" position to a "read" position. Then, power is supplied to the electronic circuit of the copier. Control section 151 causes LED 108 of LED section 150, thus informing the user that the electronic circuit has been turned on. The user manually sweeps the hand-held copier across original B in the direction opposite to arrow X (Fig. 1), while keeping reading section 102 in contact with original B and depressing both operation switches 105a and 105b. The light emitted from light source 111 is applied to original B through window 112 provided in inclined surface 100b. The light is reflected from original B. The light thus reflected is guided by light guide 113 (see Fig. 2B) and applied via lens 114 to linear image sensor 115.

As the hand-held copier is swept across original B, rubber rollers 125a and 125b, both contacting original B, rotate. Gears 126, 127 and 128 are, therefore, rotated. As a result, encoder disk 134 coupled to gear 128 rotates at the speed proportional to the speed at which the user manually sweeps the copier across original B. As encoder disk 134 rotate in this manner, the light emitted from LED 136 is intermittently applied to photosensor 137 through the radial slits 135 of encoder disk 134. Photosensor 137 produces a pulse every time it receives the light. Accordingly, it generates a pulse signal consisting of such pulses. The pulse signal, i.e., the output signal of encoder 134 (Fig. 4) which represents the distance the hand-held copier has been moved across original B, is supplied to control section 151, timing signal-generating section 152, and speed-detecting section 153.

CCD EXPOSURE-TIMING SIGNAL GENERATING

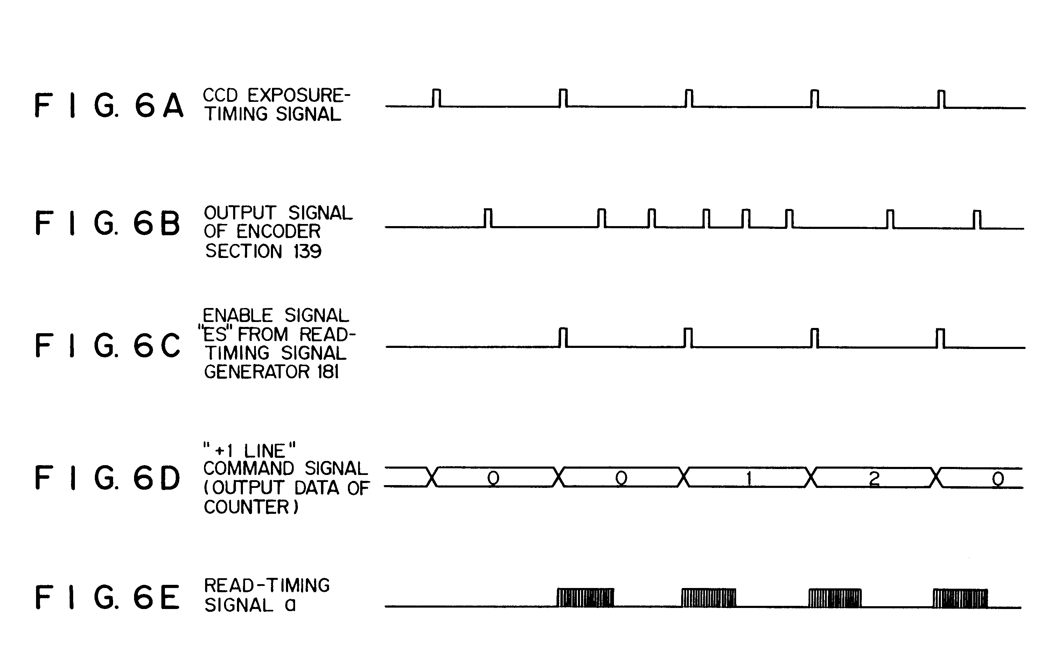

In timing signal-generating section 152 shown in Fig. 5, CCD exposure-timing signal generator 171 generates a CCD exposure-timing signal consisting of pulses which are produced at regular time intervals as is illustrated in Fig. 6A. The CCD exposure-timing signal is supplied to line image sensor 115. This signal sets flip-flop 173 and resets flip-flop 175 and counter 176. When the first pulse of the output signal (Fig. 6B) of encoder section 139 is supplied to section 152 under this condition, this pulse is supplied via AND circuit 178 to the input terminal I of flip-flop 174 and the set terminal S of flip-flop 175. Flip-flop 174 does not immediately output this pulse, but will outputs the pulse as an enable signal "ES" to read-timing signal generator 181 when the CCD exposure-timing signal, shown in Fig. 6C, is supplied to flip-flop 174. Flip-flop 175 is reset by the output signal of AND circuit 178, and outputs a "1" level signal from its output terminal Q to AND circuits 177 and 179. When the second pulse of the output signal (Fig. 6B) of encoder section 139 is input to timing signal-generating section 152 under this condition, flip-flop 173 is set, and flip-flop 175 and counter 176 are reset. However, when the second pulse is input from encoder section 139 to section 152 before the CCD exposure-timing signal (Fig. 6A) is supplied to AND circuit 177, flip-flop 173 is reset, the gate of AND circuit 178 closes, and the output signal of AND circuit 179 rises to the "1" level. In this case, the count value of counter 176 is incremented by one. Accordingly, when the copier is moved across original B at a speed slightly lower than a predetermined value, and encoder section 139 outputs only one pulse between two consecutive pulses of the CCD exposure-timing signal, the count value of counter 176 remains "0". On the other hand, when the copier is swept across original B at a speed higher than the predetermined one, and encoder section 139 produces two or more pulses between two consecutive pulses of the CCD exposure-timing signal, the count value of counter 176 proportionally increases.

Meanwhile, when enable signal "ES" is input to read-timing signal generator 181, signal generator 181 generates a read-timing signal "a" which is shown in Fig. 6E. Signal a is input to A/D converting section 157 and also to serial-to-parallel converting signal generator 182. Signal generator 182 generates a serial-to-parallel converting signal "b". Signal "b" is supplied to serial-to-parallel converting section 158 and also to address counter timing signal generator 183. This signal generator 183 generates a "+1" signal upon receipt of serial-to-parallel converting signal "b", and outputs the "+1" signal to address counter 161, address selector 162, digit counter 184, and "+1 line" command signal generator 185. Signal generator 185 outputs pulses in the number proportionate to the count value of counter 176.

IMAGE SIGNAL FROM CCD

Line image sensor 115 produces image signals from the light reflected from original B, in synchronism with the pulses of the CCD exposure-timing signal output by timing signal-generating section 152. The images signals are amplified by amplifier 156 and then supplied to A/D converting section 157. A/D converting section 157 converts the image signals into serial digital signals in synchronism with the read-timing signal "a" output by timing signal-generating section 152. These serial digital signal are input to serial-to-parallel converting section 158. This section 158 converts the serial digital signals into parallel image data in synchronism with serial-to-parallel converting signal "b" supplied from timing signal-generating section 152. The image data, thus provided, is input to data selector 151. Data selector 159 has been connected to serial-to-parallel converting section 158 in accordance with select signal "d" supplied from control section 159. This is because the hand-held copier is set in the reading mode. Hence, the image data output from serial-to-parallel converting section 158 is supplied via data selector 159 to image data memory 160. Address selector 162, which is designed to designate the addresses of memory 160, has been coupled to address counter 161 and adder circuit 163 in accordance with select signal "e" supplied from control section 151. In this case, the image data is written into image data memory 160 in the following way.

First, timing signal-generating section 152 supplies a "+1" signal to address counter 161 and address selector 162. The count value of address counter 161 is incremented by one, and counter 161 outputs address data representing "ith line, 0th digit". At the same time, address selector 162 is connected from address counter 161.

WHEN MANUALLY SWEEPING SPEED IS LOWER THAN READING SPEED

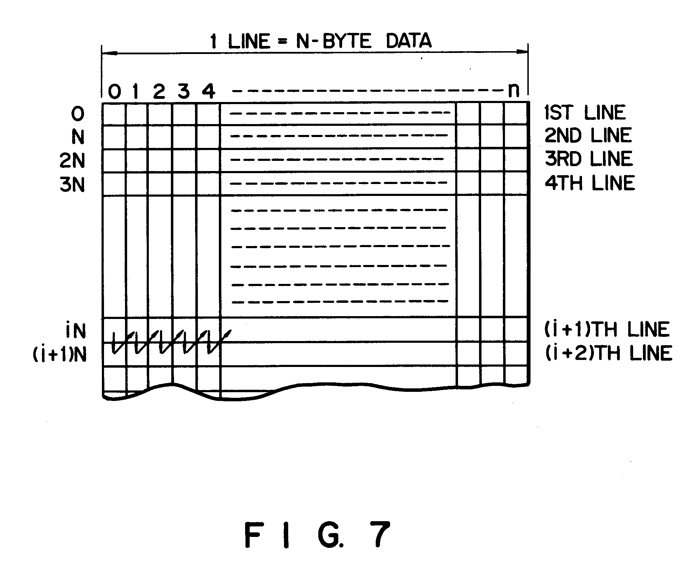

Assume that the hand-held copier is manually moved at a speed slightly lower than the predetermined speed, and that encoder section 139 outputs only one pulse between two consecutive pulses of the CCD exposure-timing signal. In this case, the count value of counter 176 provided in timing signal-generating section 152 remains "0", as has been described above. Hence, "+1 line" command signal generator 185 produces no "+1 line" command signal. The address data output by address counter 161 remains unchanged and still represents "ith line, 0th digit." This address data is supplied to adder circuit 163, and is therefore stored in the register provided in adder circuit 163. Accordingly, no process of "+1 line" command signal is carried out. Thus, an address of image data memory 160 is designated by only the output of address counter 161. The digit address is thus incremented by one every time a "+1" signal is supplied from section 152 to address counter 161. When (n+1)th "+1" signal is input to address counter 161, the address data is changed to "ith line, nth digit". As a result, in image data memory 160, image data is written at 0th to nth digits of ith line, as is shown in Fig. 7. (The ith line has been designated by the output of address counter 161, too.)

Upon completion of the writing of the one-line image data into image data memory 160, read-timing signal generator 181 of timing signal-generating section 152 stops generation of the read-timing signal "a". Then, the other components of section 152 remains in a waiting condition until encoder section 139 supplies the next pulse signal representing the distance the hand-held copier is swept across original B. As has been described, digit counter 184 outputs a carry signal when the one-line image data is written into image data memory 160. This carry signal is delayed by delay circuit 186, and is input as a set signal to address counter 161. Then, the data stored in the register provided in adder circuit 163 is transferred to address counter 161. In this case, the count value of address counter 161 remains unchanged. The sequence of the operations described in the preceding paragraph is repeated to write other lines of image data, one after another, into image data memory 160, as long as encoder section 139 produces only one pulse between any two consecutive pulses of the CCD exposure-timing signal.

## WHEN MANUALLY SWEEPING SPEED IS HIGHER THAN READING SPEED

When the user sweeps the hand-held copier at a speed higher than the predetermined speed, encoder section 139 outputs two pulses between any two consecutive pulses of the CCD exposure-timing signal. Assume that encoder section 139 produces two pulses between any two consecutive pulses of the CCD exposure-timing signal, as is illustrated in Figs. 6A and 6B. In this case, counter 176 provided in timing signal-generating section 152 has its count value increased by one. When CCD exposure-timing signal generator 171 outputs the next CCD exposure-timing signal under this condition, the output of flip-flop 174 is supplied as enable signal "ES" to read-timing signal generator 181. In response to this enable signal "ES", signal generator 181 outputs read-timing signal "a". Signal "a" is supplied to A/D converting section 157 and also to serial-to-parallel converting signal generator 182. In response to signal "a", signal generator 182 produces serial-to-parallel converting signal "b". This signal "b" is input to serial-to-parallel converting section 158 and also to address counter timing signal generator 183. In synchronism with signal "b", signal generator 183 generates a "+1" signal. The "+1" signal is supplied to address counter 161 and address selector 162. The count value of address counter 161 thereby increases by one. Hence, address counter 161 supplies the address data representing "ith line, 0th digit" to adder circuit 163 and address selector 162. Address selector 162 has selected address counter 161 in accordance with the "+1" signal supplied from signal generator 183. As a result, the address "ith line, 0th digit" of image data memory 160 is designated and the image data supplied from serial-to-parallel converting section 158 is written at this address, as illustrated in Fig. 7. Then, in the timing signal generator 152, "+1" line command timing signal from timing signal generator 185 is output to adder circuit 163 in response to the count value of counter 176 when the "+1" signal's level is returned to a low level after the "+1" signal is output from address counter timing signal generator 183. The count value of counter 176 is "1" at this time. Therefore, signal generator 185 outputs only one "+1 line" command signal, which is input to adder circuit 163. The address data stored in the register provided in adder circuit 163 is incremented by one, thus changing from "ith line, 0th digit" to "(i+1)th line, 0 digit". The new address data, "(i+1)th line, 0th digit", is input to address selector 162. Address selector 162 is connected to adder circuit 163 when the "+1" signal supplied from timing signal-generating section 152 falls to the low level. Hence, the output of adder circuit 163 is supplied to image data memory 160. As a result, the same image data as has been written at the address "ith line, 0th digit" is written at the address "(i+1)th line, 0th digit".

When the next "+1" signal is output by timing signal-generating section 152, the count value of address counter 161 is incremented by one, whereby address data representing "ith line, 1st digit" is provided. Meanwhile, in response to the "+1" signal, address selector 162 is connected to address counter 161. Therefore, the "ith line, 1st digit" address of image data memory 160 is designated. The next image data supplied from serial-to-parallel converting section 158 is thereby written at the "ith line, 1st digit" address of image data memory 160. When timing signal-generating section 152 outputs a "+1 line" command signal thereafter, the count value of address counter 161 is incremented by one line, whereby the address data is changed from "ith line, 1st digit" to "(i+1)th line, 1st digit." This new address, "(i+1)th line, 1st digit", is supplied via address selector 162 to image data memory 160, in the specific manner described above. As a result, the same image data as has been written at the "ith line, 1st digit" address is written at the "(i + 1)th line, 1st digit" address of image data memory 160. This is one of the features according to the invention.

The sequence of operations, which has been explained in the preceding paragraph, is repeated until the same image data is written in the ith line and (i + 1)th line memory locations of image data memory 160. When the image data is written in these line memory locations, address data "(i + 1)th line, nth digit" is stored in the register provided within adder circuit 163. This address data is set in address counter 161 when timing signal-generating section 152 outputs a set signal. Hence it is made possible to write the next line of image data.

FASTER MANUAL SWEEPING

When the hand-held copier is moved across original B at such high speed that encoder section 139 outputs three pulses between two CCD exposure-timing signals, as is illustrated in Figs. 6A and 6B, the count value of counter 176 provided in timing signal-generating section 152 increases to "2". Therefore, the "+ 1 line" command signal generator 185 of section 152 produces two sets of "+ 1 line" command signals at prescribed intervals when the "+ 1" signal output from address counter timing generator 183 falls to the low level. In this case, adder circuit 163 designates address "(i + 1)-th line, 0th digit" in response to the first "+ 1 line" signal output by section 152 after address counter 161 has designated address "ith line, 0th digit" in the manner described above. Then, in response to the second "+ 1 line" command signal, adder circuit 163 changes address data "(i + 1)th line, 0th digit" is changed to "(i + 2)th line, 0th digit". This new address data "(i + 2)th line, 0th digit" is supplied via address selector 162 to image data memory 160. Thereafter, timing signal-generating section 152 outputs a "+ 1" signal, and the count value of address counter 161 is incremented to "ith line, 1st digit". At this time, address selector 162 is coupled to address counter 161. The ith line memory location of image data memory 160 is thereby designated. Thereafter, the (i + 1)th and (i + 2)th line memory locations are designated in the same way. Hence, the same image data is written in the three line memory locations of image data memory 160, which is also one of the featured functions.

As may be understood from the above functions, the faster the hand-held copier is moved than the predetermined speed, the more line memory locations of image data memory 160 are used to store the same image data.

PRINTING OPERATION

It will now be explained how the hand-held copier 100 prints the image data, which has been acquired from original B, on a piece of paper A.

First, power/read/print switch 104 is moved to the "print" position, thereby setting the hand-held copier into the printing mode. Control section 151 produces select signals "d" and "e", whereby data selector 159 and address selector 162 are coupled to control section 151. The user sweeps the copier across paper A in the direction of arrow X (Fig. 1), while keeping printing section 103 in contact with paper A and depressing both operation switches 105a and 105b. As the hand-held copier is moved this way, rubber rollers 125a and 125b rotate, thereby rotating gears 126, 127 and 128. Encoder disk 134, which fastened to gear 128, therefore rotates. The light emitted from LED 136 is thus intermittently applied to photosensor 137 through radial slits 138 cut in encoder disk 134. As a result, photosensor 137 outputs pulses, which form a signal representing the speed at which the hand-held copier is being moved across paper A.

The rotation of gear 128 is transmitted by one-way clutch 133 to ribbon-feeding roller 123, and further to ribbon take-up roller 124 by gears 129 and 130. As rollers 123 and 124 rotate, ink ribbon 122a is fed from roll 122, is guided through slit 143, passes by the heating section 121a of thermal print head 121, is guided through ribbon-guiding window 142, is further guided by ribbon-feeding roller 123, and is finally taken up around ribbon take-up roller 124. Ribbon-feeding roller 123 rotates, thereby feeding ribbon 122a at the same speed as the hand-held copier is swept across paper A. Hence, no relative movement occurs between ribbon 122a and paper A.

The output pulses of photosensor 137 are supplied to control section 151 and also to timing signal-generating section 152. These pulses are the output signal of encoder section 139, which represents the distance the hand-held copier has moved across paper A. In accordance with this signal supplied from encoder section 139, section 152 generates and supplies print-timing signals to thermal printer head drive circuit 164. Further, in accordance with the output signal of encoder section 139, section 152 also designates the line addresses and digit addresses of image data memory 160, one after another. The image data is thereby read out from memory 160 via data selector 159. Meanwhile, control section 151 calculates the time for supplying power to thermal printer head 121, from the temperature of printer head 121 detected by temperature sensor 155, the voltage represented by the output signal of the power-supply voltage detector, and the density selected by rotating density control dial 107. Control section 151 also inputs the image data to printer head drive circuit 164. Circuit 164 drives thermal printer head 121 in accordance with the control data supplied from control section 151 and the timing signals supplied from timing signal-generating section 152. Thermal printer head 121 therefore prints the image data on paper "A" by using ink ribbon 122a. As the hand-held copier is moved across paper A during this printing operation, the unused portion of ribbon 122a is fed from roll 122, and the used portion of ribbon 122a is taken up around ribbon take-up roller 124. In this way, the image data stored in memory 160 is printed on paper A as the user sweeps the hand-held copier across paper A.

## KEY-IN DATA PRINTER

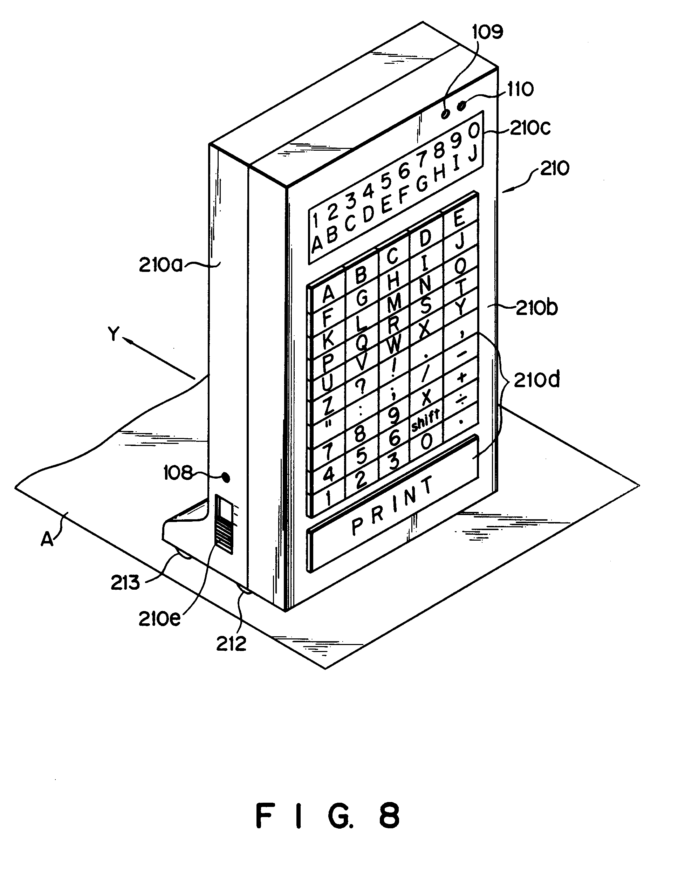

A key-in data printer according to a second embodiment of the present invention will now be described with reference to Figs. 8 to 11. This key-in data printer is similar to the hand-held copier according to the first embodiment of the present invention.

It should be noted that the same reference numerals employed in the first embodiment indicate the similar or same circuit elements according to the second embodiment.

Briefly speaking, this apparatus is different from the hand-held copier in that a key input section is used, instead of an image sensor, in order to input data. In other words, this copier functions as a printer equipped with a word processor.

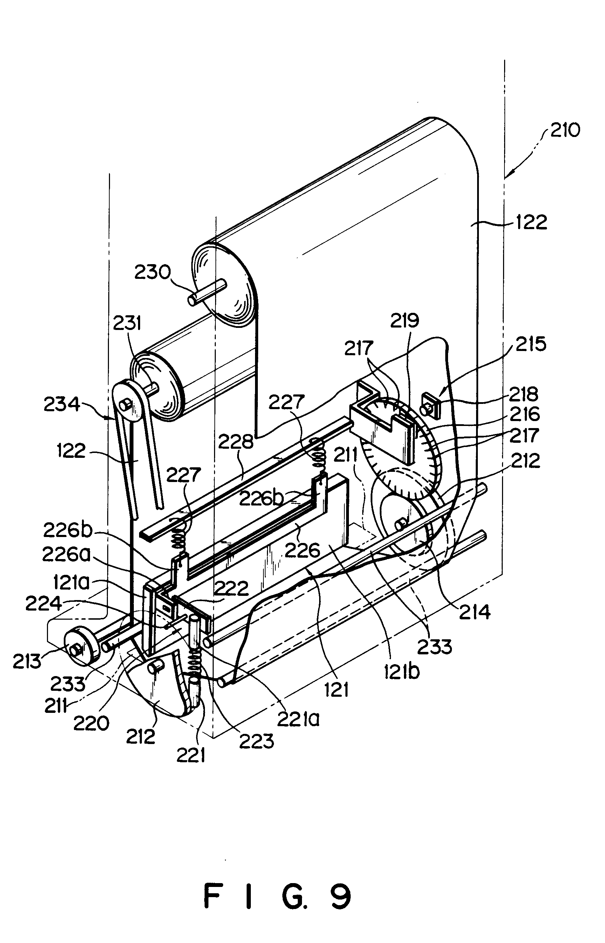

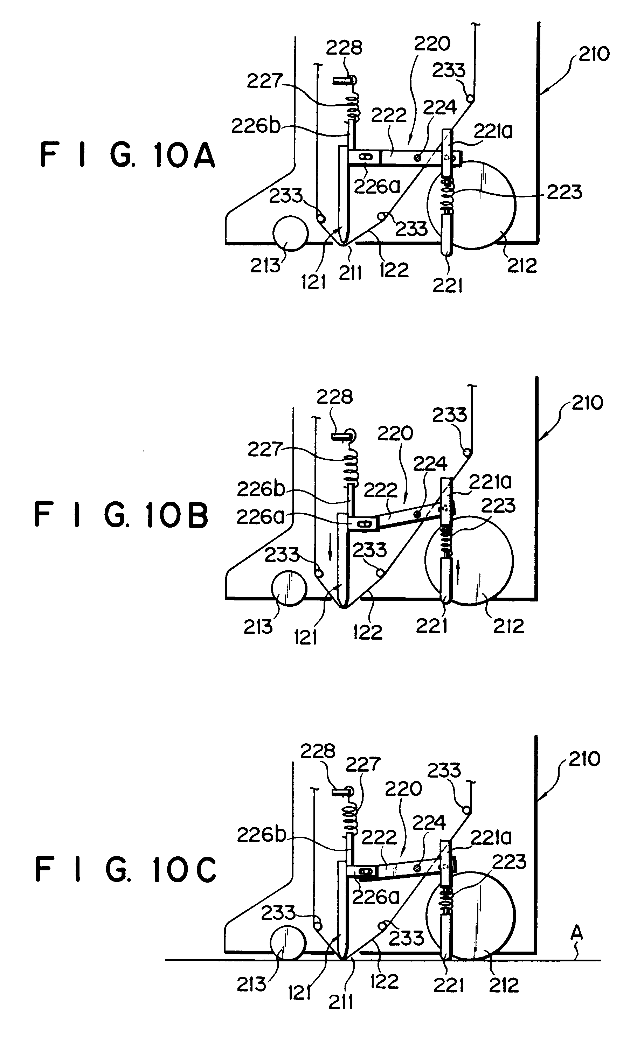

Fig. 8 is a perspective view of this key-in data printer. As is shown in this figure, the key-in data printer comprises housing 210. Housing 210 consists of front case 210b and rear case 210a. Housing 210 is shaped like a rectangular box. As is shown in Figs. 9 and 10A to 10C, an elongated printing opening 211 is cut also in the lower side of housing 210. Main roller 212 and auxiliary roller 213 are provided within housing 210, extending parallel to each other. These rollers 212 and 213 slightly protrude from housing 210 through the openings, and thus contact a piece of paper A. Main roller 212 is located close to the front side of housing 210, and auxiliary roller 213 is located close to the rear side thereof. Therefore, rollers 212 and 213 support housing 210 such that housing 210 does not tip over.

As is shown in Fig. 8, display section 210b and key input section 210d are provided on the front side of housing 210, i.e., the outer surface of front case 210b. Display section 210c has a dot-matrix liquid crystal display which can display two lines of characters in 16 x 16 dot pattern, each line consisting of ten characters. Key input section 210d has number entry keys, character keys, and a print key. The number entry keys and the character keys are selectively depressed to input data. The print key is depressed to print data on paper A.

Power/input/print switch 210e is provided on one vertical side of rear case 210a. Switch 210e can be moved to a power-off position, a data-input mode position, and a print-mode position. When it is moved to the data-input mode position, the key-in data printer will be set in a data-input mode. When it is moved to the print-mode position, the key-in data printer will be set in a print mode.

As is shown in Fig. 9, which shows the internal structure of the key-in data printer, encoder 215 is provided within housing 210. Encoder 215 is designed to output a pulse every time main roller 212 rotates through a predetermined angle. More specifically, encoder 213 comprises toothed disk 216, light-emitting element 218 provided at one side of toothed disk 216, and light-receiving element 219. Toothed disk 216 is in mesh with drive gear 214 fastened to main roller 212, and can thus rotate when main roller 212 rotates. Disk 216 has a number of slits 217 cut in its circumference and equidistantly spaced form one another in the circumferential direction of disk 216.

## PRINTER HEAD TRANSPORT MECHANISM

As is shown in Fig. 9 and Fig. 10A to 10C, printer head transport mechanism 220 for moving a print head (later described) is provided within the lower portion of housing 210. This mechanism 220 comprises contact pin 221 and pivot arm 222. Contact pin 221 is vertically positioned close to the front side of housing 210 and can move up and down. In its lowest position, pin 221 contacts paper A. Contact pin 221 is guided by a pin guide (not shown) while it is moving up and down. Pin 221 is coupled by coil spring 223 and connecting rod 221a to one end of arm 222. Arm 222 is pivotably supported at its middle portion by horizontal shaft 224 provided within housing 210. Therefore, arm 222 can rotate in either direction when contact pin 221 moves up and down. Coil spring 223 is in its maximum expanded condition when no force is applied on contact pin 221.

Thermal printer head 121 is provided within housing 210. Printer head 121 can move up and down. When printer head 121 moves down, it can thrust out of housing 210 through printing window 211. Thermal printer head 121 includes ceramic substrate 121a, a number of dot-shaped electrodes (not shown in detail) arranged in a line form on the lower end of substrate 121a, and reinforcing metal plate 121b fastened to, and covering, one side of substrate 121a. Printer head 121 is guided by a head guide (not shown) provided within housing 210, when it is movable in the vertical direction in the drawing. Head-supporting plate 226 is fastened to reinforcing metal plate 121b by screws, or is adhered to plate 121b. Hence, plate 226 also moves up and down when thermal printer head 121 moves in the same way. Head-supporting plate 226 has arm-coupling portion 226a at one end. Pivot arm 222 is pivotally coupled to this portion 226a of plate 226. A pair of coil springs 227 are connected at one end to spring support 228 provided within housing 210 and horizontally extending. More precisely, springs 227 are suspended from support 228. The lower ends of these springs 227 are connected to spring-connecting portions 226b of head-supporting plate 226. Springs 227 are contraction springs. Therefore, they always bias printer head 121 upwardly in the drawing.

## PRINTER HEAD IN REST POSITION

When the key-in data printer is not in the print mode, printer head transport mechanism 220 holds thermal printer head 121 within housing 210 by means of coil springs 227, as is illustrated in Fig. 10A. As long as printer head 121 is held inside housing 210, pivot arm 222 is rotated clockwise by coil springs 227, thereby pushing down connecting rod 221a. Contact pin 221, which is coupled to rod 221a by coil spring 223 (a compression spring), is thereby lowered, and its lower end portion protrudes out of housing 210. The distance over which thermal printer head 121 can move in the vertical direction, and the distance over which contact pin 221 can thrust out of housing 210 are determined by a stopper (not shown), which limits the clockwise rotation of rotatable arm 222. Printer head transport mechanism 220 is designed so as to push the tip of printer head 121 out of housing 210 when contact pin 221 is pushed upwardly. More specifically, when contact pin 221 is pushed upward as is shown in Fig. 10B, coil spring 223 is compressed until its reaction force surpasses the total pull of coil springs 227. As pin 221 is further pushed up, connecting rod 221a is pushed up by coil spring 223. Pivot arm 222 is thereby rotated counterclockwise, while elongating coil springs 227. As a result, thermal printer head 121 is pushed down, and its lower end protrudes from the lower side of housing 210. When contact pin 221 has its lower end moved up to the same level as the lower side of housing 210, which contacts paper A, the lower end of printer head 121 is lowered about one to a few millimeters below the lowest portions of rollers 212 and 213.

Contact pin 221 is automatically pushed upward when the user puts the hand-held copier on paper A, with both main roller 212 and auxiliary roller 213 contacting paper A, as is illustrated in Fig. 10C. In this case, thermal printer head 121 is lowered until it contacts paper A, and is not moved down any more. Since coil spring 223 is compressed, it produces a reaction, which urges pivot arm 222 to push down head 121. Hence, printer head 121 resiliently contacts paper A. Coil spring 223 expands or contracts, thereby absorbing the changes in the pressure applied to paper A by head 121, which occur as the user pushes the apparatus onto paper A strongly or weakly. Therefore, coil spring 223 achieves a resilient contact of head 121 with paper A, which is performed under a constant pressure.

Ribbon-feeding shaft 230 and ribbon take-up shaft 231 are provided within housing 210, as is shown in Fig. 9. These shafts 230 and 231 extend horizontally and parallel to each other. Both shafts 230 and 231 can be removed from housing 210. Ribbon 122 is wound around ribbon-feeding shaft 230. The forward end portion of ribbon 122 is guided downwardly, then horizontally across the lower end of head 121, and finally upwardly, and it taken up around ribbon take-up shaft 231. Ribbon-guiding rods 233 are also provided within housing 210. These rods 233 extend horizontally and parallel to one another, for guiding ribbon 122 fed from ribbon-feeding shaft 230. Ribbon take-up shaft 231 is rotated to take up ribbon 122, as the user manually sweeps the copier across paper A to print data on paper A. Shaft 231 is driven by belt-drive mechanism 234 which operates interlockingly with main roller 212.

## CIRCUIT ARRANGEMENT OF KEY-IN DATA PRINTER

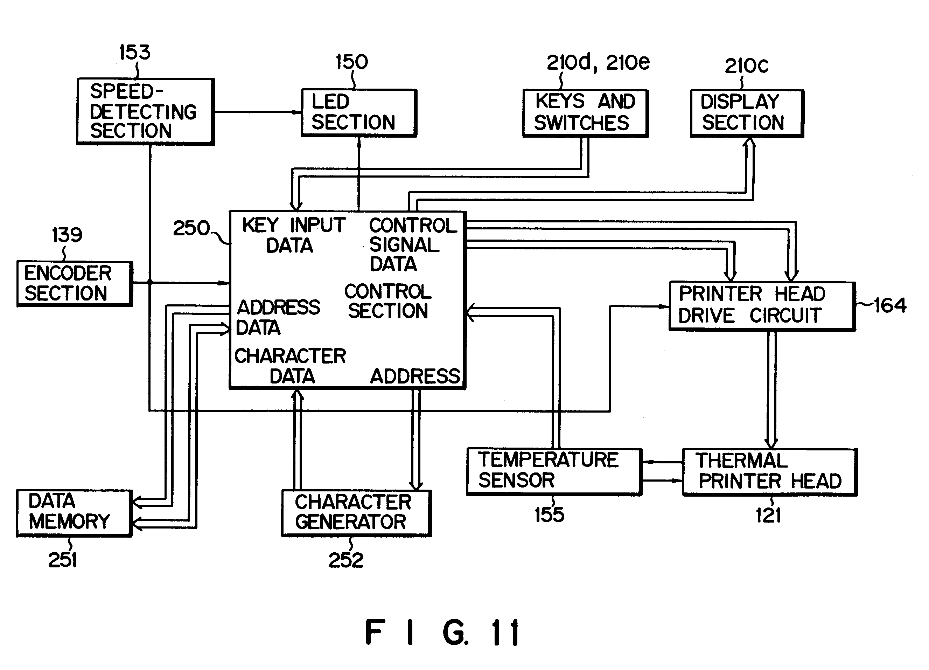

The electronic circuit provided within housing 210 of the key-in data printer reference to Fig. 11. As is shown in this drawing, the circuit arrangement includes key input section 210d and changeover switch 210e. Section 210d and changeover switch 210e are connected to control section 250. When the key-in data printer is set in the input mode, the data such as alpha-numerical data, which has been produced by operating key input section 210d, is input to control section 250, and a printer-start signal can be input from section 210d to control section 250. Changeover switch 210e is operated to input a power-off signal, a input-mode signal, or a print-mode signal to control section 250.

Control section 250 is connected to encoder section 139, and can therefore receive the output signal of encoder section 139. LED section 150, printer head drive circuit 164, temperature sensor 155, data memory 251, character generator 252 and display section 210c are connected to control section 250.

Data memory 251 is addressed by control section 250. The data input from key input section 210d is written through control section 250 into data memory 251 when the copier is set in the input mode. The data is read out from data memory 251 and supplied to control section 250 when the copier is set in the print mode. In control section 250, the data input from key input section 210d is converted into ASCII (American Standard Code for Information Interchange) codes. The ASCII codes are input to data memory 251.

Character generator 252 converts the data input from section 210d or the ASCII codes read from data memory 251 into data representing 16 x 16 dot character patterns to be displayed by display section 210c, or into 24 x 24 dot character patterns to be printed by thermal print head 121.

Display section 210c is designed to display the data input from key input section 210d when the copier is set in the input mode, and display the data read out from data memory 251 when the copier is set in the print mode.

OPERATION OF KEY-IN DATA PRINTER

The operation of the manually sweeping key-in data printer, which has been described, will now be explained, referring to Figs. 8 to 11.

Assume that the user slides changeover switch 210e from a power-off position to an input-mode position (Fig. 8). Then, the key-in data printer is turned on, and set in the input mode. Thereafter, as the user depresses the keys of key input section 210d, the addresses of data memory 251 are sequentially designated, and the data input by this key operation is stored into data memory 251. In the meantime, character generator 252 produces data representing the character patterns (i.e., the input data). This data is supplied to display section 210c and is thus displayed in the form of characters.

When the user slides changeover switch 210e from the input-mode position to a print-mode position, the hand-held copier is brought into the print mode. Thereafter, the user holds the copier and sweep it across paper A to be printed in the direction of the arrow Y, as is shown in Fig. 8, thereby to print the data on paper A. When the lower side of housing 210 contacts paper A, contact pin 221 is pushed upward via compressing coil spring 223 as shown in Fig. 10C. Coil spring 223 pushes connecting rod 221a, whereby pivot arm 222 rotates counterclockwise, thus pushing printer head 121 down against the pull of coil springs 227. As a result, printer head 121 presses ribbon 122 onto paper A. As the user sweeps the key-in data printer across paper A in the direction Y shown in Fig. 8, encoder section 139 generates timing signals. The timing signals are supplied to control section 250 and printer head drive circuit 164. In response to these timing signals, control section 250 read the data, line by line, from data memory 251. The data thus read out from memory 251 is supplied to printer head drive circuit 164. This circuit 164 drives thermal printer head 121 in accordance with the input data in synthronism with the timing signals supplied from encoder section 139, provided that the user keeps on depressing a print key included in key input section 210d. Hence, printer head 121 prints the data on paper A. Ink ribbon 122 is fed from ribbon-feeding shaft 230 and taken up around ribbon take-up shaft 231 as the key-in data printer is moved across paper A in the direction Y. Unless print key 210d is being depressed, thermal printer head 121 is not operated even if the user sweeps the key-in data printer across paper A in the direction Y indicated in Fig. 8. In other words, printer head 121 is not brought into the print mode under the condition that the key-in data printer is manually swept on paper A, but the print key 210d maintains undepressed.

ADVANTAGES OF PRINTER HEAD TRANSPORT MECHANISM

As has been described, head transport mechanism 220 provided within housing 250 holds thermal printer head 121 inside housing 210 when the copier is not used to print data. Mechanism 220 includes coil spring 223 which constitutes components of the head transport mechanism 220. This coil spring 223 resiliently depresses printer head 121 onto paper A with applying a given pressure thereto when the key-in data printer is used to print data on paper A. When the key-in data printer is in the no print condition, printer head transport mechanism 220 is completely stored within housing 210 by means of coil spring 223. Therefore, thermal printer head 121 is protected from damage or dust when the copier is not used to print data. Since the changes in the pressure applied by printer head 121 to paper A are absorbed by coil spring 223, printer head 121 mechanically contacts paper A, applying a constant pressure thereto. Therefore, printer head 121 can print data in a uniform density on paper A even if the force the user applies to the key-in data printer during the data-printing changes. The key-in data printer can, therefore, accomplish a high-quality printing. Furthermore, since printer head transport mechanism 220 prevents head 121 from applying too high a pressure to paper A, the wear of the printing face of head 121 can be minimized, thus lengthening the lifetime of printer head 121.

FIRST MODIFIED HEAD TRANSPORT MECHANISM

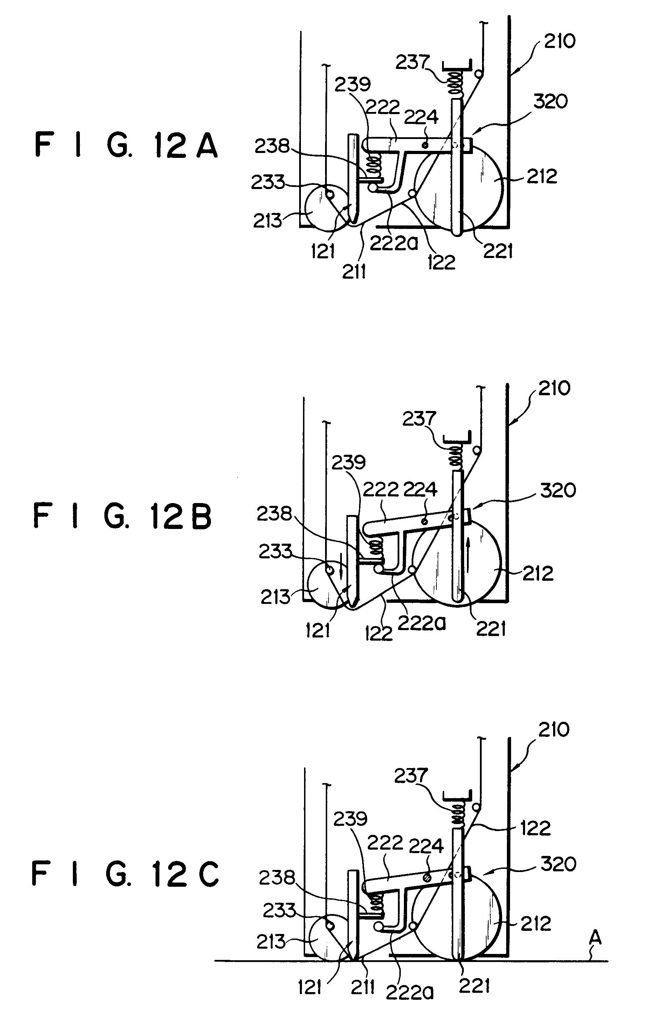

In the second embodiment shown in Figs. 8 to 11, coil spring 223, which achieves a resilient contact between head 121 and paper A, was connected at the lower end to print surface contact pin 221 and at the upper end to connecting rod 221a. Alternatively, this spring 223 may be connected at the lower end to printer head 121 and at the upper end to pivot arm 222, as is illustrated in Figs. 12A to 12C. These figures show a first modified head transport mechanism of the present invention, that is, another type of key-in data printer. In Figs. 12A, 12B and 12C, the same numerals are used, designating the same components as those used in the previous embodiments. Accordingly, no description is made in these components.

As is shown in Figs. 12A to 12C, head transport mechanism 320 comprises contact pin 221, pivot arm 222 pivotably coupled to pin 221, and coil spring 237 urging pin 221 downward. Lever 222a is integrally formed with pivot arm 222 and extending downwardly therefrom. Lever 222a abuts against horizontal plate 238 welled to reinforcing metal plate 225a (Fig. 9) fastened to one side of thermal printer head 121. Arm 222 is pivotably supported at the middle portion by horizontals shaft 224. It is pivotably coupled at one end to contact pin 221. Compression coil spring 239 is interposed between the other end of arm 222 and horizontal plate 238.

When the key-in data printer is not used, coil spring 237 pushes contact pin 221 downward such that the lower end of pin 221 protrudes from the lower side of housing 210 as is illustrated in Fig. 12A. Coil spring 237 also pivot arm 222 clockwise, whereby lever 222a holds head 121 within housing 210. Printer head transport mechanism 320 is designed so as to push the tip of printer head 121 out of housing 210 when contact pin 221 is pushed up as is shown in Fig. 12B, pivot arm 222 pivots in a counterclockwise direction, thus lowering lever 222a. Printer head 121 is therefore pushed down by coil spring 239, and its tip protrudes from the lower side of housing 210. As in the second embodiment, the tip of printer head 121 is lowered about one to a few millimeters below the lowest portions of rollers 212 and 213 when contact pin 221 has its lower end moved up to the same level as the lower side of housing 210.

Contact pin 221 is automatically pushed up when the user puts the key-in data printer on paper A, with both main roller 212 and auxiliary roller 213 contacting paper A, as is illustrated in Fig. 12C. Once thermal printer head 121 has contacted paper A, it is not lowered any more. Since coil spring 239 is compressed, it produces a reaction, which urges thermal printer head 121 into a resilient contact with paper A. In this condition, horizontal plate 238 is separated from lever 222a. Thus, printer head 121 is pushed onto paper A by only coil spring 239, without being interfered by lever 222a.

Also in this embodiment, printer head transport mechanism 320 holds thermal printer head 121 inside housing 210 when the key-in data printer is not used to print data. When the copier is put on paper A to print data thereon, the tip of printer head 121 is automatically moved out of the lower side of housing 210. Thereafter, coil spring 239 maintains printer head 121 in a resilient contact with paper A. The third embodiment can, therefore, have the same advantages as the second embodiment shown in Figs. 8 to 11. In the above embodiment, printer head 121 was vertically moved by employing coil spring 239. Alternatively, a knob is provided on an outer surface of printer housing 210 so as to transport printer head 121 in the vertical direction. No ink ribbon 122 is needed when printing data on thermal print paper.

As has been described above, two coil springs 227 are used in the second embodiment, and two coil springs 239 in the third embodiment. In each of these embodiments, these two coil springs allow printer head 121 to move up and down. Hence, when the user sweeps the copier across a waving digit sheet to print data on this sheet, the coil springs keep printer head 121 in contact with the sheet though the sheet is waving. Thus, the key-in data printer can print data on the sheet in a uniform density. Furthermore, since the coil springs expand or contract independently of each other, they keep the entire printing face of head 121 in a resilient contact with paper A even if the key-in data printer erroneously positioned with the lower side of housing 210 inclined to paper A. Therefore, the data can be printed in a uniform density in spite of the erroneous positioning of the key-in data printer.

MODIFICATIONS

In the first, second and third embodiments described above, the contact pin 221 of head transport mechanism 220 is automatically pushed up when the key-in data printer is put on paper A, and printer head 121 is automatically thrusted out of housing 210. Instead, a slider can be provided on one side of housing 210 and be connected to printer head 121, such that head 121 is moved up and down when the user operates this slider.

Also, in the previous preferred embodiments, the rollers, e.g., rubber roller 125a were employed as a rolling member. It is appreciated that other mechanical parts such as a wheel may be employed as such a rolling member.

**Claims**

1. A hand-held printing apparatus including a manually manipulable housing which has printing means for printing information on a printing medium while said housing is manually swept across said printing medium, and a transport mechanism for moving said printing means relative to said housing

**characterized in that**

the transport mechanism (220,320) includes:

contact detecting means (221) for detecting that said housing (210) contacts with said printing medium, and an intermediate member (220,222) acting upon the detection of said detecting means for causing said printing means (121) to come into resilient contact with said printing medium by a resilient member (223,227,237,239).

2. The hand-held printing apparatus as claimed in Claim 1

**characterized in that**

said printing means includes a thermal printer head (121).

3. The hand-held printing apparatus as claimed in Claim 2

**characterized in that**

said printing means further includes an ink ribbon (122) interposed between said thermal printer head (121) and said printing medium while said thermal printer head (121) is in operation.

4. The hand-held printing apparatus as claimed in Claim 1

**characterized in that**

said resilient member (223,237) includes at least one coil spring (223,237) interposed between said printing means and said housing and urging said printing means toward said printing medium.

5. The hand-held printing apparatus as claimed in Claim 1

**characterized in that**

said intermediate member (220,221) is a pivotable arm which is biased between said resilient member (223,227,237,239).

6. The hand-held printing apparatus as claimed in Claim 1

**characterized in that**

said contact detecting means (221) comprises a contact pin (221) which moves up vertically when said housing has contacted said printing medium.

7. The hand-held printing apparatus as claimed in Claim 1

**characterized in that**

said housing includes a rolling member (212,213) contacting said printing medium and rotating when said housing is swept across said printing medium.

8. The hand-held printing apparatus as claimed in Claim 7

**characterized by**

further comprising position-detecting means (139) for detecting the position of said printing means being swept across said printing medium and for producing a position-detecting signal every time said housing is swept over a predetermined distance, said position-detecting means (139) including a rotary encoder (216) capable of rotating while said rolling member (212,213) rotates.

9. The hand-held printing apparatus as claimed in Claim 7

**characterized in that**

said printing means includes a thermal printer head (121) and an ink ribbon (122) interposed between said thermal printer heand (121) and said printing medium, for transferring ink onto said printing medium while said thermal printer head is in operation, said apparatus further comprising:

ink ribbon drive means (234) for moving said ink ribbon (122) across said thermal printer head (121) while said rolling member (212,213) rotates.

10. The hand-held printing apparatus as claimed in Claim 1

**characterized by**

further comprising:

key input means (210d) for inputting data;

memory means (251) for storing the data input by said key input means (210d);

display means (210c) for displaying at least one of the data stored in said memory means (251) and the data directly input by said input means (210d);

printer-driving means (164) for driving said printing means in response to the data stored in said memory means;

position-detecting means (139) for detecting the position of said printing means being swept across said printing medium and for producing a position-detecting signal every time said housing is swept over a predetermined distance, said position-detecting signal representing the position of said printing means with respect to said printing medium;

control means (151,152) for controlling said printer-driving means (164) in synchronism with the position-detecting signal produced by said position-detecting means (139); and

said printing means for printing the data stored in said memory means (251) on said printing medium.

11. The hand-held printing apparatus as claimed in Claim 1

**characterized by**

further comprising:

input means (111,115) for producing image information signals while said housing is manually swept across a material having image information to be copied;

memory means (160) for storing the image information signals derived from said input means (111,115),

printer-driving means (164) for driving said printing means in response to the image information signals read out from said memory means (160);

position-detecting means (139) for detecting the position of said housing being swept across one of said printing medium and said material and for producing a position-detecting signal every time said housing is swept over a predetermined distance, said position-detecting signal representing the position of said housing with respect to one of said printing medium and said material; and

control means (151,152) for controlling said printer-driving means (164) in synchronism with the position-detecting signal produced by said position-detecting means (139), so as to cause said printing means to print the image information on said printing medium in the same manner as said image information is formed on said material to be copied.

12. The hand-held printing apparatus as claimed in Claim 11,

**characterized in that**

said printing means includes thermal printer head (121) and ink ribbon (122) interposed between said thermal printer head (121) and said printing medium while said thermal printer head (121) is in operation.

13. The hand-held printing apparatus as claimed in Claim 11

**characterized in that**

said input means (111,114,115) includes photoelectric converting means (115) for converting the image information formed on said material into said image information signals under the control of said control means (151,152) while said housing is manually swept across said material.

14. The hand-held printing apparatus as claimed in Claim 13

**characterized in that**

said housing is substantially a rectangular box (100) with at least one opening (112,141) cut in one end thereof along its longitudinal direction;

said photoelectric converting means (111,114,115) includes:

a light source (111) provided near said opening (112) for applying light to said material;

a lens (114) spaced apart from said opening (112) in the longitudinal direction of said housing for collecting the light reflected from said material;

an image sensor (115) for receiving the light from said lens (114) and for converting the received light into electric signals having levels corresponding to the amount of the received light while said housing is manually swept across said material; and

said printing means including said thermal printer head (121) capable of protruding out of said housing through said opening (141).

15. The hand-held printing apparatus as claimed in Claim 14

**characterized by**

further comprising:

a rolling member (125a,125b) capable of contacting at least one of said printing medium and said material for rotating with respect to said housing while said housing is manually swept across one of said printing medium and said material.

16. The hand-held printing apparatus as claimed in Claim 15

**characterized in that**

said position-detecting means (139) includes at least one rotary encoder (134), and said printing means includes an ink ribbon (122) interposed between said thermal printer head (121) and said printing medium, for transferring ink onto said printing medium while said thermal printer head (121) is in operation;

said apparatus further comprising:

encoder-rotating means (126,127,128) for rotating said rotary encoder (134) in response to rotation of said rolling member (125a); and

ink ribbon drive means (124,126,127,128,129,130,133) for moving said ink ribbon (122) across said thermal printer head (121) while said rolling member (125a) rotates.

17. The hand-held printing apparatus as claimed in Claim 16

**characterized in that**
said rolling member (125a,125b) is at least one pair of wheels (125a,126b) and provided between said photoelectric converting means (111,114,115) and said thermal printer head (121), and said ink ribbon drive means (124,126,127,128,129,130,133) includes a one-way clutch (133) for feeding said ink ribbon (122) while said rolling member (125a) rotates in a predetermined direction when said housing is manually swept across said printing medium.

18. The hand-held printing apparatus as claimed in Claim 11
**characterized by**
further comprising:
a command key (105a,105b) for generating a print-start signal and a print-end signal and supplying both signals to said control means (151,152).

19. The hand-held printing apparatus as claimed in Claim 13
**characterized by**
further comprising:
a command key (105a,105b) for generating a read-start signal and a read-end signal and supplying both signals to said control means (151,152).

20. The hand-held printing apparatus as claimed in Claim 13
**characterized by**
further comprising:
speed-detecting means (139) for detecting the speed acquired while said housing is manually swept; and,
memory control means (152,161,163) for writing the identical image information signals derived from said photoelectric converting means (115), into a plurality of different memory regions of said memory means (160) when said speed exceeds a predetermined speed, the number of said memory regions being determined by a degree of said over speed.

21. The hand-held printing apparatus as claimed in Claim 11
**characterized by**
futher comprising:
addressing means (151,161,162) for designating an area of said memory means (160) in accordance with the signal output from said position-detecting means (139) when the image information signals from said input means (111,115) are written into said memory means (160),

and for designating the area of said memory means (160) prior to output of the signal from said position-detecting means (139) when the image information signals are read out from said memory means (160) and supplied to said printer-driving means (164), so as to print image information on said printing medium in response to the position-detecting signal output from said position-detecting means (139).

**Patentansprüche**

1. Von Hand gehaltene Druckvorrichtung mit einem von Hand manipulierbaren Gehäuse, welches eine Druckeinrichtung zum Drucken von Information auf ein Druckmedium aufweist, während das Gehäuse von Hand über das Druckmedium bewegt wird, sowie einen Transportmechanismus zur Bewegung der Druckeinrichtung relativ zu dem Gehäuse,
**dadurch gekennzeichnet, daß**
der Transportmechanismus (220, 320) aufweist:
eine Kontaktermittlungseinrichtung (221) zur Ermittlung, daß das Gehäuse (210) das Druckmedium berührt, und ein Zwischenteil (220, 222), welches auf die Ermittlung der Ermittlungseinrichtung reagiert, um die Druckeinrichtung (121) dazu zu veranlassen, daß sie in federelastischen Kontakt mit dem Druckmedium durch ein federelastisches Teil (223, 227, 237, 239) gelangt.

2. Von Hand gehaltene Druckvorrichtung nach Anspruch 1,
dadurch gekennzeichnet, daß
die Druckeinrichtung einen thermischen Druckkopf (121) aufweist.

3. Von Hand gehaltene Druckvorrichtung nach Anspruch 2,
dadurch gekennzeichnet, daß
die Druckeinrichtung weiterhin ein Farbband (122) aufweist, welches zwischen dem thermischen Druckkopf (121) und dem Druckmedium angeordnet ist, während der thermische Druckkopf (121) in Betrieb ist.

4. Von Hand gehaltene Druckvorrichtung nach Anspruch 1,
dadurch gekennzeichnet, daß
das federelastische Teil (223, 237) zumindest eine Schraubenfeder (223, 237) aufweist, die zwischen der Druckeinrichtung und dem Gehäuse angeordnet ist, und die Druckeinrichtung in Richtung auf das Druckmedium drückt.

5. Von Hand gehaltene Druckvorrichtung nach Anspruch 1,
dadurch gekennzeichnet, daß
das Zwischenteil (220, 221) ein schwenkbarer Arm ist, der zwischen dem federelastischen Teil (223, 227, 237, 239) vorgespannt ist.

6. Von Hand gehaltene Druckvorrichtung nach Anspruch 1,
dadurch gekennzeichnet, daß
die Kontaktermittlungseinrichtung (221) einen Kontaktstift (221) aufweist, der sich vertikal nach oben bewegt, wenn das Gehäuse das Druckmedium berührt hat.

7. Von Hand gehaltene Druckvorrichtung nach Anspruch 1,
dadurch gekennzeichnet, daß
das Gehäuse ein Rollteil (212, 213) aufweist, welches das Druckmedium berührt und sich dreht, wenn das Gehäuse über das Druckmedium bewegt wird.

8. Von Hand gehaltene Druckvorrichtung nach Anspruch 7,
dadurch gekennzeichnet, daß
weiterhin eine Positionsermittlungseinrichtung (139) vorgesehen ist, um die Position der Druckeinrichtung zu ermitteln, welche über das Druckmedium bewegt wird, und um ein Positionsermittlungssignal jedesmal dann zu erzeugen, wenn das Gehäuse über eine vorbestimmte Entfernung bewegt wird, wobei die Positionsermittlungseinrichtung (139) einen Drehcodierer (216) aufweist, der sich drehen kann, während sich das Drehteil (212, 213) dreht.

9. Von Hand gehaltene Druckvorrichtung nach Anspruch 7,
dadurch gekennzeichnet, daß
die Druckeinrichtung einen thermischen Druckkopf (121) und ein Farbband (122) aufweist, welches zwischen dem Druckkopf (121) und dem Druckmedium angeordnet ist, um Druckfarbe auf das Druckmedium zu übertragen, während der thermische Druckkopf in Betrieb ist, und daß die Vorrichtung weiterhin aufweist: eine Farbband-Antriebseinrichtung (234), um das Farbband (122) über den thermischen Druckkopf (121) zu bewegen, während sich das Drehteil (212, 213) dreht.

10. Von Hand gehaltene Druckvorrichtung nach Anspruch 1,
dadurch gekennzeichnet, daß
sie weiterhin aufweist:
eine Tasteneingabeeinrichtung (210d) zur Eingabe von Daten;
eine Speichereinrichtung (251) zum Speichern der Daten, die von der Tasteneingabeeinrichtung (210d) eingegeben wurden;
eine Anzeigeeinrichtung (210c) zur Anzeige zumindest der Daten, die in der Speichereinrichtung (251) gespeichert sind, und der Daten, die direkt durch die Eingabeeinrichtung (210d) eingegeben werden;
eine Drucktreibereinrichtung (164) zum Treiben der Druckeinrichtung in Reaktion auf die in der Speichereinrichtung gespeicherten Daten;
eine Positionsermittlungseinrichtung (139) zur Ermittlung der Position der Druckeinrichtung, die über das Druckmedium bewegt wird, und zur Erzeugung eines Positionsermittlungssignals jedesmal dann, wenn das Gehäuse über eine vorbestimmte Entfernung bewegt wird, wobei das Positionsermittlungssignal die Position der Druckeinrichtung in bezug auf das Druckmedium repräsentiert;
eine Steuereinrichtung (151, 152) zum Steuern der Drucktreibereinrichtung (164) synchron mit dem Positionsermittlungssignal, welches von der Positionsermittlungseinrichtung (139) erzeugt wird; und
die Druckeinrichtung zum Drucken der Daten, die in der Speichereinrichtung (251) gespeichert sind, auf das Druckmedium.

11. Von Hand gehaltene Druckvorrichtung nach Anspruch 1,
dadurch gekennzeichnet, daß
sie weiterhin aufweist:
eine Eingabeeinrichtung (111, 115) zur Erzeugung von Bildinformationssignalen, während das Gehäuse von Hand über ein Material bewegt wird, welches zu kopierende Bildinformation aufweist;
eine Speichereinrichtung (160) zum Speichern der Bildinformationssignale, die von der Eingabeeinrichtung (111, 115) abgeleitet werden,
eine Drucktreibereinrichtung (164) zum Treiben der Druckeinrichtung in Reaktion auf die Bildinformationssignale, die aus der Speichereinrichtung (160) ausgelesen werden;
eine Positionsermittlungseinrichtung (139) zur Ermittlung der Position des Gehäuses, welches über das Druckmedium oder das Material bewegt wird, und zur Erzeugung eines Positionsermittlungssignals jedesmal dann, wenn das Gehäuse über eine vorbestimmte Entfernung bewegt wird, wobei das Positionsermittlungssignal die Position des Gehäuses in bezug auf das Druckmedium oder das Material repräsentiert; und
eine Steuereinrichtung (151, 152) zum Steuern der Druckertreibereinrichtung (164) synchron mit dem Positionsermittlungssignal, welches von der Positionsermittlungseinrichtung (139) erzeugt wird, um so die Druckeinrichtung zum Drucken der Bildinformation auf das Druckmedium auf dieselbe Weise zu veranlassen, wie die Bildinformation auf dem zu kopierenden Material gebildet wird.

12. Von Hand gehaltene Druckvorrichtung nach Anspruch 11,
dadurch gekennzeichnet, daß
die Druckeinrichtung einen thermischen Druckkopf (121) sowie ein Farbband (122) aufweist, welches zwischen dem thermischen Druckkopf (121) und dem Druckmedium angeordnet ist, während der thermische Druckkopf (121) in Betrieb ist.

13. Von Hand gehaltene Druckvorrichtung nach Anspruch 11,
dadurch gekennzeichnet, daß
die Eingabeeinrichtung (111, 114, 115) eine photoelektrische Wandlereinrichtung (115) aufweist, um die auf dem Material gebildete Bildinformation in die Bildinformationssignale unter der Steuerung der Steuereinrichtung (151, 152) umzuwandeln, während das Gehäuse von Hand über das Material bewegt wird.

14. Von Hand gehaltene Druckvorrichtung nach Anspruch 13,
dadurch gekennzeichnet, daß
das Gehäuse im wesentlichen ein rechteckiger Kasten (100) mit zumindest einer Öffnung (112, 141) ist, die in eines Ende des Kastens entlang seiner Längsrichtung eingeschnitten ist;
die photoelektrische Wandlereinrichtung (111, 114, 115) aufweist:
eine nahe der Öffnung (112) vorgesehene Lichtquelle (111) zum Aufbringen von Licht auf das Material;
eine Linse (114), die von der Öffnung (112) in der Längsrichtung des Gehäuses beabstandet ist, um das von dem Material reflektierte Licht zu sammeln;
einen Bildsensor (115) zum Empfang des Lichtes von der Linse (114) und zum Umwandeln des empfangenen Lichtes in elektrische Signale, welche Pegel aufweisen, die der empfangenen Lichtmenge entsprechen, während das Gehäuse von Hand über das Material bewegt wird; und
die Druckeinrichtung einschließlich des thermischen Druckkopfes (121) so ausgebildet ist, daß sie durch die Öffnung (141) aus dem Gehäuse vorstehen kann.

15. Von Hand gehaltene Druckvorrichtung nach Anspruch 14,
dadurch gekennzeichnet, daß
sie weiterhin aufweist:
ein Rollteil (125a, 125b), welches zur Berührung zumindest entweder des Druckmediums oder des Materials ausgebildet ist, um sich in bezug auf das Gehäuse zu drehen, während das Gehäuse von Hand entweder über das Druckmedium oder das Material bewegt wird.

16. Von Hand gehaltene Druckvorrichtung nach Anspruch 15,
dadurch gekennzeichnet, daß
die Positionsermittlungseinrichtung (139) zumindest einen Drehkodierer (134) aufweist, und die Druckeinrichtung ein Farbband (122) aufweist, welches zwischen dem thermischen Druckkopf (121) und dem Druckmedium angeordnet ist, um Druckfarbe auf das Druckmedium zu übertragen, während der thermische Druckkopf (121) in Betrieb ist;
wobei die Vorrichtung weiterhin aufweist:
eine Kodiererdreheinrichtung (126, 127, 128) zum Drehen des Drehkodierers (134) in Reaktion auf die Drehung des Drehteils (125a); und eine Farbbandantriebseinrichtung (124, 126, 127, 128, 129, 130, 133) zur Bewegung des Farbbandes (122) über den thermischen Druckkopf (121), während sich das Drehteil (125a) dreht.

17. Von Hand gehaltene Druckvorrichtung nach Anspruch 16,
dadurch gekennzeichnet, daß
das Rollteil (125a, 125b) zumindest ein Paar von Rädern (125a, 126b) ist, welches zwischen der photoelektrischen Wandlereinrichtung (111, 114, 115) und dem thermischen Druckkopf (121) angeordnet ist, und daß die Farbbandantriebseinrichtung (124, 126, 127, 128, 129, 130, 133) eine Einwegkupplung (133) aufweist, um das Farbband (122) zuzuführen, während sich das Drehteil (125a) in einer vorbestimmten Richtung dreht, wenn das Gehäuse manuell über das Druckmedium bewegt wird.

18. Von Hand gehaltene Druckvorrichtung nach Anspruch 11,
dadurch gekennzeichnet, daß
weiterhin eine Befehlstaste (105a, 105b) vorgesehen ist, um ein Druckstartsignal und ein Druckendesignal zu erzeugen, und um beide Signale der Steuereinrichtung (151, 152) zuzuführen.

19. Von Hand gehaltene Druckvorrichtung nach Anspruch 13,

dadurch gekennzeichnet, daß
weiterhin eine Befehlstaste (105a, 105b) vorgesehen ist, um ein Lesestartsignal und ein Leseendesignal zu erzeugen, und um beide Signale der Steuereinrichtung (151, 152) zuzuführen.

20. Von Hand gehaltene Druckvorrichtung nach Anspruch 13,
dadurch gekennzeichnet, daß
sie weiterhin aufweist:
eine Geschwindigkeitsermittlungseinrichtung (139) zur Ermittlung der Geschwindigkeit, die eingenommen wird, während das Gehäuse von Hand bewegt wird; und
eine Speichersteuereinrichtung (152, 161, 163) zum Einschreiben der identischen Bildinformationssignale, die von der photoelektrischen Wandlereinrichtung (115) abgeleitet werden, in mehrere unterschiedliche Speicherbereiche der Speichereinrichtung (160), wenn die Geschwindigkeit eine vorbestimmte Geschwindigkeit überschreitet, wobei die Anzahl der Speicherbereiche durch ein Ausmaß der zu hohen Geschwindigkeit bestimmt wird.

21. Von Hand gehaltene Druckvorrichtung nach Anspruch 11,
dadurch gekennzeichnet, daß
sie weiterhin aufweist:
eine Adressiereinrichtung (151, 161, 162) zur Festlegung eines Bereichs der Speichereinrichtung (160) entsprechend dem Signal, welches von der Positionsermittlungseinrichtung (139) ausgegeben wird, wenn die Bildinformationssignale von der Eingabeeinrichtung (111, 115) in die Speichereinrichtung (160) eingeschrieben werden;
und zur Festlegung des Bereichs der Speichereinrichtung (160) vor der Ausgabe des Signals von der Positionsermittlungseinrichtung (139), wenn die Bildinformationssignale von der Speichereinrichtung (160) ausgelesen und der Drucktreibereinrichtung (164) zugeführt werden, um so Bildinformation auf das Druckmedium in Reaktion auf das Positionsermittlungssignal zu drucken, welches von der Positionsermittlungseinrichtung (139) ausgegeben wird.

**Revendications**

1. Un appareil d'impression tenu à la main, comprenant un boîtier prévu pour être manipulé manuellement qui contient des moyens d'impression destinés à imprimer une information sur un support d'impression, pendant que le boîtier est déplacé manuellement avec un mouvement de balayage sur le support d'impression, et un mécanisme de transport destiné à déplacer les moyens d'impression par rapport au boîtier,
caractérisé en ce que
le mécanisme de transport (220, 320) comprend :
des moyens de détection de contact (221) destinés à détecter le fait que le boîtier (210) est en contact avec le support d'impression, et un élément intermédiaire (220, 222) qui agit au moment où les moyens de détection détectent la condition de contact, pour faire en sorte que les moyens d'impression (121) viennent en contact élastique avec le support d'imression sous l'action d'un élément élastique (223, 227, 237, 239).

2. L'appareil d'impression tenu à la main selon la revendication 1,
caractérisé en ce que
les moyens d'impression comprennent une tête d'imprimante thermique (121).

3. L'appareil d'impression tenu à la main selon la revendication 2
caractérisé en ce que
les moyens d'impression comprennent en outre un ruban encreur (122) interposé entre la tête d'impression thermique (121) et le support d'impression, pendant que la tête d'impression thermique (121) est en fonctionnement.

4. L'appareil d'impression tenu à la main selon la revendication 1
caractérisé en ce que
l'élément élastique (223, 237) comprend au moins un ressort hélicoîdal (223, 237) qui est interposé entre les moyens d'impression et le boîtier et qui sollicite les moyens d'impression vers le support d'impression.

5. L'appareil d'impression tenu à la main selon la revendication 1
caractérisé en ce que
l'élément intermédiaire (220, 221) est un doigt pivotant qui est intercalé entre des parties de l'élément élastique (223, 227, 237, 239) et est sollicité par ce dernier.

6. L'appareil d'impression tenu à la main selon la revendication 1
caractérisé en ce que
les moyens de détection de contact (221) comprennent un doigt de contact (221) qui s'élève verticalement lorsque le boîtier est venu en contact avec le support d'impression.

**7.** L'appareil d'impression tenu à la main selon la revendication 1
caractérisé en ce que
le boîtier comprend un élément roulant (212, 213) qui vient en contact avec le support d'impression et qui tourne lorsque le boîtier est déplacé avec un mouvement de balayage sur le support d'impression.

**8.** L'appareil d'impression tenu à la main selon la revendication 7
caractérisé en ce que
il comprend en outre des moyens de détection de position (139) qui sont destinés à détecter la position des moyens d'impression qui sont déplacés avec un mouvement de balayage sur le support d'impression, et à produire un signal de détection de position chaque fois que le boîtier est déplacé avec un mouvement de balayage sur une distance prédéterminée, ces moyens de détection de position (139) comprenant un codeur tournant (216) capable de tourner lorsque l'élément roulant (212, 213) tourne.

**9.** L'appareil d'impression tenu à la main selon la revendication 7
caractérisé en ce que
les moyens d'impression comprennent une tête d'imprimante thermique (121) et un ruban encreur (122) intercalé entre la tête d'imprimante thermique (121) et le support d'impression, pour transférer de l'encre vers le support d'impression pendant que la tête d'imprimante thermique est en fonctionnement, cet appareil comprenant en outre :
des moyens d'entraînement de ruban encreur (234) qui sont destinés à déplacer le ruban encreur (122) transversalement à la tête d'imprimante thermique (121) pendant que l'élément roulant (212, 213) tourne.

**10.** L'appareil d'impression tenu à la main selon la revendication 1
caractérisé en ce qu'il comprend en outre :
des moyens d'entrée à touches (210d) pour l'introduction de données;
des moyens de mémoire (251) destinés à enregistrer les données qui sont introduites par les moyens d'entrée de données (210d);
des moyens de visualisation (210c) destinés à visualiser au moins un type de données parmi les données enregistrées dans les moyens de mémoire (251) et les données qui sont directement introduites par les moyens d'entrée (210d);
des moyens d'attaque d'imprimante (164) destinés à attaquer les moyens d'impression sous la dépendance des données qui sont enregistrées dans les moyens de mémoire;
des moyens de détection de position (139) destinés à détecter la position des moyens d'impression qui sont déplacés avec un mouvement de balayage sur le support d'impression, et à produire un signal de détection de position chaque fois que le boîtier est déplacé d'un mouvement de balayage sur une distance prédéterminée, ce signal de détection de position représentant la position des moyens d'impression par rapport au support d'impression;
des moyens de commande (151, 152) destinés à commander les moyens d'attaque d'imprimante (164) en synchronisme avec le signal de détection de position que produisent les moyens de détection de position (139); et
les moyens d'impression destinés à imprimer sur le support d'impression les données qui sont enregistrées dans les moyens de mémoire (251).

**11.** L'appareil d'impression tenu à la main selon la revendication 1
caractérisé en ce qu'il comprend en outre :
des moyens d'entrée (111, 115) destinés à produire des signaux d'information d'image pendant que le boîtier est déplacé manuellement avec un mouvement de balayage sur une matière portant une information d'image à copier;
des moyens de mémoire (160) destinés à enregistrer les signaux d'information d'image qui proviennent des moyens d'entrée (111, 115),
des moyens d'attaque d'imprimante (164) destinés à attaquer les moyens d'impression sous la dépendance des signaux d'information d'image qui sont lus dans les moyens de mémoire (160);
des moyens de détection de position (139) destinés à détecter la position du boîtier qui est déplacé avec un mouvement de balayage soit sur le support d'impression, soit sur la matière précitée, et à produire un signal de détection de position chaque fois que le boîtier est déplacé avec un mouvement de balayage sur une distance prédéterminée, ce signal de détection de position représentant la position du boîtier par rapport au support d'impression ou à la matière précitée; et
des moyens de commande (151, 152) destinés à commander les moyens d'attaque d'imprimante (164) en synchronisme avec le signal de détection de position qui est produit par les moyens de détection de position (139), pour faire en sorte que les moyens d'impression impriment l'information d'image sur le support d'impression d'une manière identique à celle selon laquelle l'information d'image existe sur la matière sur laquelle porte l'opération de copie.

12. L'appareil d'impression tenu à la main selon la revendication 11
caractérisé en ce que
les moyens d'impression comprennent une tête d'imprimante thermique (121) et un ruban encreur (122) intercalé entre la tétre d'imprimante thermique (121) et le support d'impression, pendant que la tête d'imprimante thermique (121) est en fonctionnement.

13. L'appareil d'impression tenu à la main selon la revendication 11
caractérisé en ce que
les moyens d'entrée (111, 114, 115) comprennent des moyens de conversion photoélectriques (115) qui sont destinés à convertir l'information d'image formée sur la matière précitée, pour donner les signaux d'information d'image, sous la commande des moyens de commande (151, 152), pendant que le boîtier est déplacé manuellement avec un mouvement de balayage sur cette matière.

14. L'appareil d'impression tenu à la main selon la revendication 13
caractérisé en ce que
le boîtier est pratiquement une boîte rectangulaire (100) ayant au moins une ouverture (112, 141) découpée dans l'une de ses extrémités dans sa direction longitudinale;
les moyens de conversion photoélectriques (111, 114, 115) comprennent :
une source de lumière (111) placée près de l'ouverture (112) pour appliquer de la lumière à la matière précitée;
une lentille (114) espacée par rapport à l'ouverture (112) dans la direction longitudinale du boîtier, pour collecter la lumière qui est réfléchie par la matière précitée;
un capteur d'image (115) destiné à recevoir la lumière qui provient de la lentille (114) et à convertir la lumière reçue en signaux électriques ayant des niveaux correspondant à la quantité de lumière reçue, pendant que le boîtier est déplacé manuellement avec un mouvement de balayage sur la matière précitée; et
les moyens d'impression comprennent la tête d'imprimante thermique (121) capable de faire saillie hors du boîtier à travers l'ouverture précitée (141).

15. L'appareil d'impression tenu à la main selon la revendication 14
caractérisé en ce qu'il comprend en outre :
un élément roulant (125a, 125b) capable de venir en contact avec l'un au moins des éléments comprenant le support d'impression et la matière précitée, pour tourner par rapport au boîtier pendant que ce dernier est déplacé manuellement avec un mouvement de balayage sur le support d'impression ou sur la matière précitée.

16. L'appareil d'impression tenu à la main selon la revendication 15
caractérisé en ce que
les moyens de détection de position (139) comprennent au moins un codeur tournant (134), et les moyens d'impression comprennent un ruban encreur (122) intercalé entre la tête d'imprimante thermique (121) et le support d'impression, pour transférer de l'encre sur le support d'impression pendant que la tête d'imprimante thermique (121) est en fonctionnement;
cet appareil comprenant en outre :
des moyens d'entraînement en rotation du codeur (126, 127, 128) destinés à entraîner en rotation le codeur tournant (134) sous l'effet de la rotation de l'élément roulant (125a); et
des moyens d'entraînement de ruban encreur (124, 126, 127, 128, 129, 130, 133) qui sont destinés à déplacer le ruban encreur (122) transversalement à la tête d'imprimante thermique (121) pendant que l'élément roulant (125a) tourne.

17. L'appareil d'impression tenu à la main selon la revendication 16
caractérisé en ce que
l'élément roulant (125a, 125b) est constitué par au moins une paire de roues (125a, 126b) et il est placé entre les moyens de conversion photoélectriques (111, 114, 115) et la tête d'imprimante thermique (121), et les moyens d'entraînement de ruban encreur (124, 126, 127, 128, 129, 130, 133) comprennent un embrayage unidirectionnel (133) qui est destiné à faire avancer le ruban encreur (122) pendant que l'élément roulant (125a) tourne dans une direction prédéterminée, lorsque le boîtier est déplacé manuellement avec un mouvement de balayage sur le support d'impression.

18. L'appareil d'impression tenu à la main selon la revendication 11
caractérisé en ce qu'il comprend en outre :
une touche d'ordre (105a, 105b) qui est destinée à produire un signal de début d'impression et un signal de fin d'impression, et à appliquer ces deux signaux aux moyens de commande, (151, 152).

19. L'appareil d'impression tenu à la main selon la revendication 13
caractérisé en ce qu'il comprend en outre :
une touche d'ordre (105a, 105b) qui est destinée à produire un signal de début de lecture et un signal de fin de lecture et à appliquer ces deux signaux aux moyens de commande (151, 152).

20. L'appareil d'impression tenu à la main selon la revendication 13
caractérisé en ce qu'il comprend en outre :
des moyens de détection de vitesse (139) destinés à détecter la vitesse acquise pendant que le boîtier est déplacé manuellement avec un mouvement de balayage; et
des moyens de commande de mémoire (152, 161, 163) destinés à écrire les signaux d'information d'image identiques provenant des moyens de conversion photoélectriques (115), dans un ensemble de régions de mémoire différentes des moyens de mémoire (160) lorsque la vitesse dépasse une vitesse prédéterminée, le nombre de ces régions de mémoire étant déterminé par l'importance de ce dépassement de vitesse.

21. L'appareil d'impression tenu à la main selon la revendication 11
caractérisé en ce qu'il comprend en outre :
des moyens d'adressage (151, 161, 162) destinés à désigner une zone des moyens de mémoire (160) conformément au signal émis par les moyens de détection de position (139), lorsque les signaux d'information d'image provenant des moyens d'entrée (111, 115) sont écrits dans les moyens de mémoire (160),
et à désigner la zone des moyens de mémoire (160) avant l'émission du signal provenant des moyens de détection de position (139), lorsque les signaux d'information d'image sont lus dans les moyens de mémoire (160) et sont appliqués aux moyens d'attaque d'imprimante (164), de façon à imprimer une information d'image sur le support d'impression sous la dépendance du signal de détection de position qui est émis par les moyens de détection de position (139).

F I G. 1

F I G. 2A

120

119

118

100

115

116

114

145

122

124

122a

105a

105b

123

113

121

144

HA

D

143

111

131

112

141

121a

A

102

142

103

B

# F I G. 2 B

# F I G. 3

F I G. 4

EP 0 249 212 B1

F I G. 5

EP 0 249 212 B1

**F I G. 6 A** CCD EXPOSURE-TIMING SIGNAL

**F I G. 6 B** OUTPUT SIGNAL OF ENCODER SECTION 139

**F I G. 6 C** ENABLE SIGNAL "ES" FROM READ-TIMING SIGNAL GENERATOR 181

**F I G. 6 D** "+1 LINE" COMMAND SIGNAL (OUTPUT DATA OF COUNTER)

**F I G. 6 E** READ-TIMING SIGNAL a

1 LINE = N-BYTE DATA

|  | 0 1 2 3 4 ――――――――――――― n |  |
|---|---|---|
| 0 | | 1ST LINE |
| N | | 2ND LINE |
| 2N | | 3RD LINE |
| 3N | | 4TH LINE |
| iN | | (i+1)TH LINE |
| (i+1)N | | (i+2)TH LINE |

F I G. 7

# F I G. 8

F I G. 9

F I G. 10A

F I G. 10B

F I G. 10C

F I G. 11

EP 0 249 212 B1

F I G. 12 A

F I G. 12 B

F I G. 12 C